(19) Europäisches Patentamt
European Patent Office
Office européen des brevets

(11) **EP 4 455 102 A1**

(12) **EUROPÄISCHE PATENTANMELDUNG**

(43) Veröffentlichungstag:
**30.10.2024   Patentblatt 2024/44**

(21) Anmeldenummer: **24165030.8**

(22) Anmeldetag: **21.03.2024**

(51) Internationale Patentklassifikation (IPC):
**C03C 8/16** (2006.01)   **C03C 14/00** (2006.01)
**C03C 17/04** (2006.01)   **C03C 27/10** (2006.01)
**C03C 3/089** (2006.01)

(52) Gemeinsame Patentklassifikation (CPC):
**C03C 8/16; C03C 3/089; C03C 14/006;
C03C 17/04; C03C 27/10;** C03C 2218/113

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **29.03.2023   DE 102023107996**

(71) Anmelder:
• **SCHOTT AG
55122 Mainz (DE)**
• **SCHOTT Technical Glass Solutions GmbH
07745 Jena (DE)**

(72) Erfinder:
• **MANGOLD, Stephanie
55122 Mainz (DE)**
• **MENKE-BERG, Yvonne
55122 Mainz (DE)**
• **SPIER, Martin
55122 Mainz (DE)**
• **WIESEKE, Hubert
07745 Jena (DE)**

(74) Vertreter: **Schott Corporate IP
Hattenbergstraße 10
55122 Mainz (DE)**

(54) **GLASSCHEIBE UMFASSEND EINE IN WENIGSTENS EINEM BEREICH WENIGSTENS EINER SEITE DER GLASSCHEIBE AUFGETRAGENE BESCHICHTUNG, VERBUND UMFASSEND EINE SOLCHE SOWIE PASTE ZUR HERSTELLUNG EINER SOLCHEN GLASSCHEIBE**

(57)    Die vorliegende Offenbarung betrifft allgemein Glasscheiben, insbesondere bereichsweise beschichtete Glasscheiben, die beispielsweise für ein Fahrzeug eingesetzt werden können, sowie einen Verbund umfassend eine solche Glasscheibe und eine Paste zur Herstellung einer solchen Glasscheibe.

Fig. 1

EP 4 455 102 A1

**Beschreibung**

Gebiet der Erfindung

Die vorliegende Offenbarung betrifft allgemein Glasscheiben, insbesondere bereichsweise beschichteten Glasscheiben, die beispielsweise für ein Fahrzeug eingesetzt werden können, sowie einen Verbund umfassend eine solche Glasscheibe und eine Paste zur Herstellung einer solchen Glasscheibe. Die Glasscheibe umfasst dabei ein Glas umfassend $SiO_2$ und $B_2O_3$. Insbesondere betrifft daher die vorliegende Offenbarung auch Glasscheiben aus oder umfassend Borosilikatglas.

Hintergrund der Erfindung

Glasscheiben aus oder umfassend Borosilikatgläser, insbesondere auch solche, welche zumindest bereichsweise beschichtet sind, sind bereits seit langem bekannt und finden ihren Einsatz beispielsweise als Backofensichtscheiben in Backofentüren. Die Vorteile des Borosilikatglases sind hier dessen thermische Beständigkeit im Vergleich zu herkömmlichen Kalknatrongläsern, so dass beispielsweise Backofensichtscheiben für Pyrolyseöfen häufig solche Borosilikatglasscheiben umfassen. Solche Borosilikatglasscheiben können auch verwendet werden als Abdeckplatten für Kochgeräte, welche man beispielsweise auch als Kochplatte oder Kochfläche bezeichnen kann.

Aber auch für andere Anwendungen können Borosilikatgläser vorteilhaft sein, da solche Gläser inhärente Vorteile beispielsweise hinsichtlich Kratzfestigkeit bzw. allgemein mechanischer Beständigkeit sowie auch chemischer Beständigkeit gegenüber den bekannten Kalknatrongläsern aufweisen. Daher werden zunehmend solche Borosilikatglasscheiben auch in Windschutzscheiben eingesetzt.

Es ist bekannt, in der Außenverglasung von Fahrzeugen beispielsweise Borosilikatglas, wie es beispielsweise unter dem Handelsnamen Borofloat ® kommerziell erhältlich ist, einzusetzen. Ein solches Glas ist beispielsweise sehr gut geeignet für Laminatverglasungen und zeichnet sich durch eine sehr hohe Transmission im Bereich des sichtbaren Lichts aus. Weiterhin verfügen solche Borosilikatgläser über eine sehr gute Wärmebeständigkeit, eine hohe chemische Beständigkeit und eine gute mechanische Festigkeit.

Beispielsweise beschreibt die internationale Patentanmeldung WO 2015/059406 A laminierte Glasscheiben. Eine dieser Scheiben kann beispielsweise ein Borosilikatglas umfassen, beispielsweise die äußere Scheibe.

Die internationale Patentanmeldung WO 2017/157660 A1 beschreibt eine Verbundglasscheibe für ein Head-Up-Display. Auch hier kann eine der Scheiben des Verbundglases Borosilikatglas umfassen.

Die CO 2017/0005596 A1 beschreibt ebenfalls eine Autoglasscheibe mit hoher Beständigkeit.

Die internationale Patentanmeldung WO 2019/130285 A1 beschreibt ein Laminat mit hoher Beständigkeit gegen Abrasion und Umwelteinflüsse.

Schließlich beschreibt die internationale Patentanmeldung WO 2018/122769 A1 ein Laminat mit hoher Bruchfestigkeit.

Windschutzscheiben sind zur Sicherheit der Fahrzeuginsassen als Verbundglasscheiben ausgebildet und weisen im Randbereich üblicherweise eine Beschichtung auf. Diese Beschichtung dient zum einen der optischen Kaschierung beispielsweise von Verklebungen oder Komponenten, wie beispielsweise Antennen, zum anderen auch deren Schutz vor UV-Strahlung. In der Regel ist dieser Rahmen zwischen den beiden Glasscheiben eines Verbundes angeordnet. Der Verbund umfasst ferner noch eine polymerische, somit eine ein Polymer umfassende oder aus einem Polymer bestehende Lage zwischen den beiden Glasscheiben, welche die Glasscheiben miteinander verbindet. Die Glasscheiben mit der zwischen ihnen angeordneten Beschichtung in wenigstens einem Bereich, insbesondere im Randbereich, werden aufeinander gelegt und in einem thermischen Umformungsprozess gebogen. Anschließend wird eine polymerische Lage zwischen beide Scheiben gebracht und die gebogenen Glasscheiben miteinander verbunden, sodass schließlich eine Verbundglasscheibe (welche im Rahmen der vorliegenden Offenbarung auch einfach als "Verbund" bezeichnet wird), erhalten wird.

An Glasscheiben, welche von einem solchen Verbund umfasst sind, werden daher eine Reihe von Anforderungen gestellt. Da die Biegeprozesse thermisch erfolgen, müssen die Glasscheiben und die darauf aufgebrachte Beschichtung diesen Temperaturen gewachsen sein. Die Glasscheiben und die Beschichtung müssen mit der polymerischen Lage eine Verbindung in der Form eingehen können, dass ein stabiler Verbund gebildet wird und es nicht zu Delaminationen zwischen Glas und Polymer kommt. Schließlich ist es erforderlich, dass die Beschichtung eine ausreichende optische Dichtigkeit aufweist, damit Komponenten, die im Rahmenbereich der Windschutzscheibe angeordnet sind, nicht störend sichtbar sind. Dies verhindert eine Ablenkung des Fahrzeugführers und erhöht so die Fahrsicherheit. Auch Mikrorisse oder sonstige Defekte der Beschichtung sind nach Möglichkeit zu vermeiden oder mindestens zu minimieren.

Neben der Temperaturbeständigkeit von Glas und Beschichtung, der angesprochenen Kompatibilität von Glas bzw. Beschichtung mit einem polymerischen Material zur Bildung eines Verbundes, der optischen Dichte und der Minimierung möglicher Defekte spielt jedoch auch die mechanische Festigkeit, beispielhaft charakterisiert durch die Bruchfestigkeit, einer beschichteten Glasscheibe eine Rolle. Hier ist es bekannt, dass Beschichtungen, gerade besonders haftfeste Beschichtungen, die Festigkeit einer Glasscheibe beeinträchtigen können. Gerade besonders haftfeste Beschichtungen wie glasbasierte Beschichtungen können hier die mechanische Festigkeit, wie Bruchfestigkeit oder Biegefestigkeit, kritisch herabsetzen. Dies gilt prinzipiell für alle Glassubstrate, aber umso mehr, wenn das Substrat, hier also die Glasscheibe, einen niedrigen Ausdehnungskoeffizienten aufweist, wie dies bei Borosilikatglasscheiben der Fall ist. Denn hier kann es beispielsweise bei der Verwendung bekannter keramischer Farben zu Unterschieden in den Ausdehnungskoeffizienten von Beschichtung und Substrat kommen, welche als ursächlich für die beobachteten Festigkeitsverluste beschichteter Glasscheiben erachtet werden.

Bekannt sind ebenfalls bereits seit langem sogenannte Sol-Gel-Beschichtungen oder Sol-Gel-Schichten auf Glas.

Waren solche Sol-Gel-Schichten in den ersten kommerziellen Anwendungen als dünne oxidische Schichten ausgebildet, welche insbesondere zur Herstellung von optisch wirksamen Beschichtungssystemen auf Glas dienten (beispielsweise in den kommerziell erhältlichen Produkten Amiran®, Conturan® und Mirogard®), zeigte sich zunehmend auch das Potential von Sol-Gel-Materialien als Bindemittel von partikelbasierten oder partikulären Beschichtungen.

Beispielsweise beschreibt das deutsche Gebrauchsmuster DE 20 2008 003 804 U1 Sol-Gel-Beschichtungen für Glasverbunde. Beispielsweise kann die Beschichtung als poröse, Sol-Gel-basierte Einzelschicht ausgebildet sein, oder die Beschichtung kann als Mehrschichtsystem von Schichten mit unterschiedlichen Brechungsindizes aufgebaut sein. Die Beschichtungen nach DE 20 2008 003 804 U1 umfassen keine Pigmente und dienen explizit der Verbesserung des Lichtstroms durch das Verbundsystem und können insbesondere in der Form der Einzelschicht als Antireflex-Schicht verstanden werden. Sofern es sich bei dem Glasverbund nach DE 20 2008 003 804 U1 um einen Zwei-Scheiben-Verbund handelt, sind die Sol-Gel-Schichten weiterhin auch auf derjenigen Seite der Scheibe angeordnet, welche nach außen, also auf der der weiteren Scheibe des Verbundes weg, angeordnet sind.

Die US 2013/0266781 A1 beschreibt einen Beschichtungsaufbau von pigmentierten Beschichtungen, die mit einem Bindemittel auf Sol-Gel-Basis erhalten werden. Der Beschichtungsaufbau umfasst zwei Beschichtungen, von denen die eine, in der Regel farbgebende und direkt auf dem Substrat angeordnete Beschichtung eine pigmentierte Beschichtung mit einem Bindemittel auf Sol-Gel-Basis ist. Diese wenigstens eine Beschichtung ist porös gegen den Durchtritt von Fluiden ausgebildet, sodass eine weitere pigmentierte Beschichtung mit einem Silikonbindemittel als Versiegelungsschicht auf die wenigstens eine Beschichtung aufgebracht wird. Erhalten wird somit ein mit einem dekorativen Beschichtungssystem versehener Glas- oder Glasartikel, beispielsweise für den Einsatz als Kochfläche. Ein Verbund aus mehreren Scheiben ist nicht adressiert.

Die US 2009/0233082 A2 beschreibt glas- oder glaskeramische Artikel mit einer dekorativen Beschichtung. Die dekorative Beschichtung umfasst wenigstens ein Dekorpigment und umfasst ein Sol-Gel-Bindemittel, wobei nach dem Aushärten und Einbrennen der Beschichtung eine keramikartige Struktur der dekorativen Beschichtung erhalten wird. Die Beschichtung umfasst daher auch einen hohen Anteil an Pigment, insbesondere deutlich mehr Pigment als Bindemittel, bezogen auf das Gewicht. Ein Verbund ist nicht beschrieben.

Die französische Patentanmeldung FR 3 084 355 A1 beschreibt ein emailliertes Substrat, bei welchem die Emailleschicht porös ausgebildet ist. Zusätzlich zu der porösen Emailleschicht kann das Substrat noch weitere Schicht aufweisen, beispielsweise eine siliziumbasierte poröse Sol-Gel-Beschichtung, die als transparente Funktionsschicht ausgebildet ist und entsprechend keine Pigmente umfasst.

US 2015/0225285 A2 beschreibt ein Verfahren zum Drucken auf Glas. Ein Glassubstrat wird hierbei zunächst mit einem Haftvermittler beschichtet, woraufhin eine oder auch mehrere Lagen mittels einer Tinte gedruckt werden. Nach diesem Druck können die Beschichtung oder die Beschichtungen ausgehärtet werden. Weiterhin ist es möglich, weitere Lagen auf diese Beschichtungen aufzubringen, beispielsweise auch eine Folie aufzulaminieren. Eine Verbundscheibe umfassend zwei Glasscheiben wird nicht beschrieben, ebenso wenig eine pigmentierte, Sol-Gel-basierte Beschichtung.

Die US 2010/0047556 A2 beschreibt eine dekorative Beschichtung für Glas- oder Glaskeramikartikel. Die dekorative Beschichtung umfasst neben plättchenförmigen Pigmenten einen festen Schmierstoff, wobei das Gewichtsverhältnis von Pigment zu Schmierstoff zwischen 10:1 und 1:1 liegt. Die Anwendungen der Artikel betrifft insbesondere sogenannte Kochfelder. Verbundglasscheiben sind nicht adressiert.

Auch die US 2010/0028629 A2 beschreibt Glas- oder Glaskeramikartikel, welche eine dekorative Beschichtung aufweisen. Die Beschichtung umfasst zwei Beschichtungslagen, von welchen die vom Substrat angewandte Lage, auch als Versiegelung bezeichnet, neben plättchenförmigen Pigmenten einen festen Schmierstoff aufweist, wobei das Gewichtsverhältnis von Pigment zu Schmierstoff zwischen 10:1 und 1:1 liegt. Die Anwendungen der Artikel betrifft insbesondere sogenannte Kochfelder. Verbundglasscheiben sind nicht adressiert.

Schließlich beschreibt die europäische Patentanmeldung EP 3 830 046 A1 ein emailliertes Substrat, bei welchem die Emailleschicht porös ausgebildet ist. Zusätzlich zu der porösen Emailleschicht kann das Substrat noch weitere Schichten aufweisen, beispielsweise eine siliziumbasierte poröse Sol-Gel-Beschichtung, die als transparente Funktionsschicht ausgebildet ist und entsprechend keine Pigmente umfasst. Die Sol-Gel-Schicht kann insbesondere als poröse, entspiegelnd wirkende Beschichtung mit niedrigem Brechungsindex von 1,3 oder weniger ausgebildet sein.

Die vorstehend beschriebenen Sol-Gel-Schichten sind entweder nicht für eine Anwendung in einem Laminat gedacht, insbesondere nicht zur Anordnung als Zwischenschicht eines Laminats, oder sind nicht pigmentiert ausgebildet. Auch sind keine Verbundscheiben mit hoher Festigkeit adressiert.

Es besteht damit ein Bedarf an beschichteten Glasscheiben, welche die vorgenannten Schwächen des Standes der Technik zumindest mildern. Ebenso besteht ein Bedarf an einer Paste zur Herstellung solcher Glasscheiben und an einem Scheibenverbund, welcher eine solche beschichtete Glasscheibe umfasst.

Aufgabe der Erfindung

Die Aufgabe der Erfindung besteht in der Bereitstellung einer Glasscheibe, insbesondere einer bereichsweise beschichteten Glasscheibe für ein Fahrzeug, einer Paste zur Herstellung einer solchen Glasscheibe und an einem Verbund umfassend eine solche Glasscheibe, welche die vorgenannten Schwächen des Standes der Technik zumindest teilweise überwinden oder zumindest mindern.

Zusammenfassung der Erfindung

Die Aufgabe der Erfindung wird gelöst durch den Gegenstand der unabhängigen Ansprüche. Bevorzugte und spezielle Ausführungsformen finden sich in der Beschreibung, den Figuren und den abhängigen Ansprüchen der vorliegenden Offenbarung.

Die Offenbarung betrifft damit allgemein eine Glasscheibe, insbesondere eine bereichsweise beschichtete Glasscheibe, wie eine bereichsweise beschichtete Glasscheibe für ein Fahrzeug. Die Glasscheibe umfasst allgemein ein Glas umfassend $SiO_2$ und $B_2O_3$, ist also als Borosilikatglasscheibe ausgebildet, sowie wenigstens eine in wenigstens einem Bereich wenigstens einer Seite der Glasscheibe aufgetragene Beschichtung. Die wenigstens eine Beschichtung umfasst wenigstens ein Bindemittel umfassend $SiO_2$ und wenigstens ein Pigment sowie vorzugsweise wenigstens einen als Füllstoff ausgebildeten Zusatzstoff. Die wenigstens eine Beschichtung umfasst weniger als 500 ppm $Bi_2O_3$ und/oder weniger als 500 ppm ZnO, jeweils bezogen auf das Gewicht.

Diese Ausgestaltung weist eine Reihe von Vorteilen auf.

So weist vorzugsweise die Glasscheibe in dem wenigstens einen Bereich, welcher auf der wenigstens einen Seite der Glasscheibe die aufgetragene wenigstens eine Beschichtung aufweist, eine Biegefestigkeit zwischen wenigstens 80 und höchstens 300 MPa, bevorzugt wenigstens 100 und höchstens 210 MPa, besonders bevorzugt wenigstens 140 MPa, auf.

Allgemein gilt dieser Wert der Festigkeit für die gesamte Glasscheibe, kann also beispielsweise auch bestimmt werden an einer nicht vollflächig beschichteten Glasscheibe. Allerdings hat sich gezeigt, dass bei Glasscheiben nach Ausführungsformen, welche eine Beschichtung wie nach der vorliegenden Offenbarung beschrieben aufweisen, diese sehr gute Festigkeit eben auch im beschichteten Bereich erhalten wird.

Diese sehr gute Biegefestigkeit der beschichteten Glasscheibe umfassend ein Glas umfassend $SiO_2$ und $B_2O_3$, also mit anderen Worten der beschichteten Borosilikatglasscheibe, ergibt sich dabei in vorteilhafter Weise aus der Ausgestaltung der wenigstens einen Beschichtung, die ein Bindemittel umfasst, welches $SiO_2$ umfasst, aber gleichzeitig weniger als 500 ppm $Bi_2O_3$ und/oder weniger als 500 ppm ZnO, auch hier jeweils bezogen auf das Gewicht, und/oder weniger als 500 ppm $B_2O_3$ und/oder weniger als 500 ppm eines Alkalioxides, jeweils bezogen auf das Gewicht. Dies liegt an der speziellen Ausgestaltung der Beschichtung, welche nämlich nach einer bevorzugten Ausführungsform als Sol-Gel-Beschichtung ausgestaltet ist.

Damit kann man nach der vorliegenden Offenbarung den Vorteil einer glasbasierten Beschichtung, also einer Beschichtung mit einem anorganischen, amorphen (insbesondere röntgenamorphen) Bindemittel, mit einer guten Festigkeit einer resultierenden beschichteten Glasscheibe auf einfache Weise verbinden. Die gute Festigkeit der resultierenden beschichteten Glasscheibe, welche sich insbesondere in der Biegefestigkeit zeigt, welche vorzugsweise in den vorgenannten Grenzen liegt, ergibt sich dabei insbesondere darauf, dass die vorliegende wenigstens eine Beschichtung, obwohl sie $SiO_2$ umfasst, nicht als glasflussbasierte Beschichtung ausgebildet ist und daher bei nicht zu hohen Temperaturen, insbesondere im Vergleich zu glasflussbasierten Beschichtungen, ausgehärtet bzw. eingebrannt werden kann und vorzugsweise auch wird. Beispielsweise sind bei den Beschichtungen nach Ausführungsformen Temperaturen von bis zu 400°C ausreichend für einen Einbrand, beispielsweise Temperaturen um etwa 380°C. Dies ist insbesondere vorteilhaft mit dem Blick auf die Unterschiede im thermischen Ausdehnungskoeffizienten, welche sich zwischen der Beschichtung und dem Substrat, hier also der Glasscheibe, ergeben und welche zu einer Erniedrigung der Festigkeit beitragen können. Eine glasflussbasierte Beschichtung bietet zwar ebenfalls den Vorteil einer glasbasierten Beschichtung mit hoher thermischer, mechanischer und/oder chemischer Beständigkeit - je nach genauer Zusammensetzung des verwendeten Glasflusses -, muss allerdings bei höheren Temperaturen eingebrannt werden, wobei es zum Aufschmelzen nicht nur des Glasflusses selbst kommt, sondern auch ein Teil der Oberfläche des Glassubstrats zumindest anschmilzt, sodass sich eine sogenannte "Anschmelz-Reaktionszone" ausbildet. Der Schmelzvorgang ist dabei nicht nur energieintensiver als das Aushärten/Einbrennen der wenigstens einen Beschichtung nach der vorliegenden Offenbarung, sondern erniedrigt auch durch dieses Anschmelzen der Oberfläche der Glasscheibe die Festigkeit der beschichteten Glasscheibe gegenüber der deren Ausgangsfestigkeit.

Die niedrige Einbrandtemperatur der Beschichtung nach Ausführungsformen der Offenbarung ist auch deshalb vorteilhaft im Vergleich mit der Einbrandtemperatur von glasflussbasierten Beschichtungen, weil der Biegeprozess, welcher häufig für einen Verbund, für den eine Glasscheibe nach Ausführungsformen eingesetzt werden kann, sich in der Regel nicht nach den Einbrandtemperaturen der Beschichtung richtet, sondern alleine vom Substrat abhängt, und dem $T_g$ (Transformationstemperatur des Glases, Glasübergangstemperatur) des Substrates.

Zwar existieren eine Reihe von Glasflüssen, welche das Problem der hohen Einbrandtemperatur adressieren und/oder deren thermischer Ausdehnungskoeffizient auf eher niedrigdehnende Gläser, wie beispielsweise Borosilikatglas, so gut es geht abgestimmt ist, insbesondere Glasflüsse auf Basis von $Bi_2O_3$ oder ZnO. Dennoch bleibt auch in diesem Fall die inhärente Festigkeitserniedrigung bestehen, die sich aus einem partiellen Anschmelzen der Glasoberfläche ergibt.

Dieses Problem kann mit der wenigstens einen Beschichtung nach der vorliegenden Offenbarung, bei welcher die Beschichtung ein $SiO_2$ umfassendes Bindemittel umfasst, welches aber eben kein Glasfluss ist, adressiert werden. Das Bindemittel nach der vorliegenden Offenbarung kann nach einer Ausführungsform insbesondere ein Sol-Gel-Bindemittel sein, insbesondere eines auf $SiO_2$-Basis, sodass eine Beschichtung mit einem ganz überwiegend, also zu mehr als 50 Gew.-%, vorzugsweise sogar mehr als 90 Gew.-%, aus $SiO_2$ ausgebildeten Bindemittel erhalten wird. Die für einen Glasfluss charakteristischen Komponenten ZnO und $Bi_2O_3$ weist die wenigstens eine Beschichtung ganz allgemein zu weniger als jeweils 500 ppm, bezogen auf das Gewicht, auf. Dennoch können mit einer solchen Beschichtung die vorteilhaften Eigenschaften einer glasbasierten Beschichtung, insbesondere die gute thermische und chemische Beständigkeit, erhalten werden, und dies bei gleichzeitig guter mechanischer Festigkeit der beschichteten Glasscheibe.

Die Biegefestigkeit der (beschichteten) Glasscheibe beträgt dabei in dem beschichteten Bereich vorzugsweise mindestens 50% der Biegefestigkeit der unbeschichteten Glasscheibe. Bei der mechanischen Festigkeit, wie beispielsweise der Biegefestigkeit, handelt es sich um einen statistischen Wert, sodass hier selbstverständlich auch nicht dieselbe Scheibe vor und nach Beschichtung hinsichtlich der Biegefestigkeit untersucht würde; diese vorstehende Aussage bezieht sich vielmehr auf Untersuchungen, die an unbeschichteten Glasscheiben und beschichteten Glasscheiben derselben Zusammensetzungen und Ausgestaltung durchgeführt wurden. Als Biegefestigkeit wird im Rahmen der vorliegenden Offenbarung eine auch als Doppelringbiegezugfestigkeit bezeichnete Festigkeit der Glasscheibe verstanden, welche jeweils nach DIN 1288-5 ermittelt wurde. Im Rahmen der vorliegenden Offenbarung wird als Festigkeitswert jeweils das arithmetische Mittel angegeben.

Vorteilhaft ist allgemein die Ausbildung des Bindemittels als umfassend $SiO_2$. Auf diese Weise wird allgemein eine gute chemische und thermische Beständigkeit des Bindemittels ermöglicht. Allgemein können solche Bindemittel Silikone, Polysiloxane, Polysilsesquioxane oder Teilhydrolysate aus Siloxanen und Mischungen aus diesen sein oder diese umfassen. Die genannten Bindemittel werden in dieser Schrift in dem Überbegriff Sol-Gel Bindemittel zusammengefasst. Sofern diese Bindemittel bzw. deren Vorläufermaterialien (Precursor) organische Bestandteile umfassen, können diese nach einem Aushärten und ggf. einem thermischen Einbrand in der resultierenden Beschichtung verbleiben, aber auch zu großen Teilen ausgebrannt sein, in Abhängigkeit von der genauen Zusammensetzung der Vorläufermaterialien und der jeweiligen Einbrandprozedur.

Die gute chemische Beständigkeit einer solchen Beschichtung nach Ausführungsformen der vorliegenden Offenbarung ergibt sich auch daraus, dass die Beschichtung auf weitere Komponenten, die üblicherweise Bestandteil einer glasflussbasierten Beschichtung für Borosilikatglasscheiben sind und die dazu dienen, einen möglichst niedrigen Schmelzpunkt (und entsprechend eine möglichst niedrige Einbrandtemperatur) zu erzielen, von der wenigstens einen Beschichtung nach einer Ausführungsform nicht umfasst sind.

So umfasst die wenigstens eine Beschichtung alternativ oder zusätzlich gemäß der Offenbarung weniger als 500 ppm eines Alkalioxides. Unter einem Alkalioxid wird in der vorliegenden Offenbarung das Oxid eines Alkalimetalls verstanden. Insbesondere umfasst die Beschichtung nach einer Ausführungsform weniger als 500 ppm von $Na_2O$ und/oder von $K_2O$ und/oder von $Li_2O$. Die Angabe von ppm bezieht sich hier - im Allgemein stets im Rahmen der vorliegenden Offenbarung - auf das Gewicht.

Alternativ oder zusätzlich umfasst die wenigstens eine Beschichtung nach der Offenbarung weniger als 500 ppm $B_2O_3$. $B_2O_3$ ist eine oft verwendete Komponente in Glasflüssen für Scheiben aus oder umfassend Borosilikatglas, insbesondere verwendet, um zu einer Absenkung der Schmelztemperatur des Glasflusses und/oder zu einer möglichst niedrigen thermischen Dehnung der resultierenden Beschichtung beizutragen. Die Abwesenheit dieser Komponente unterstreicht daher die Ausbildung der wenigstens einen Beschichtung als zwar glasbasierte, aber eben nicht glassflussbasierte Beschichtung.

Nach einer bevorzugten Ausführungsform der Offenbarung ist die wenigstens eine Beschichtung als Sol-Gel-Beschichtung ausgebildet. Unter einem Sol-Gel-Bindemittel wird allgemein ein Bindemittel verstanden, bei dem wenigstens ein Bestandteil ein durch eine Hydrolyse-Kondensationsreaktion aus einem siliziumorganischen Precursor entstandener, beispielsweise durch die sauer katalysierte Hydrolyse und Kondensation von Verbindungen wie Tetraethylorthosilikat (TEOS) oder verwandten oder ähnlichen Verbindungen erhaltener Bestandteil ist, wobei eine große Variation bei der Herstellung solcher Bindemittel besteht und auch eine Mischung unterschiedlicher Precursoren möglich ist, beispielsweise die Zugabe überwiegend anorganischer, partikelbasierter Sole oder die Zugabe sogenannter Polysiloxane und/oder Silikone, die im Rahmen dieser Offenbarung alle unter den großen Begriff des "Sol-Gel-Bindemittels" subsumiert werden.

Der Vorteil der Sol-Gel-Bindemittel aus oder umfassend $SiO_2$ ist nicht nur ihre große Flexibilität in der Zusammenstellung, sondern auch ihre gute Kompatibilität mit glasartigen Substraten wie Glas und Glaskeramik unterschiedlichster Zusammensetzung. Gerade für Glas- oder Glaskeramiksubstrate mit niedrigem thermischen Ausdehnungskoeffizienten kann ein solches Bindemittel vorteilhaft sein, da auf diese Weise nicht nur eine gute Anbindung einer Beschichtung, wie beispielsweise der wenigstens einen Beschichtung der Glasscheibe nach der Offenbarung, gegeben ist, sondern durch $SiO_2$ als Bindemittel auch ein niedriger linearer thermischer Ausdehnungskoeffizient der Beschichtung erhalten werden kann.

Daher kann es auch besonders vorteilhaft sein, wenn die wenigstens eine Beschichtung ein Sol-Gel-Bindemittel, umfasst, denn auf diese Weise wird sichergestellt, dass relativ niedrige Einbrandtemperaturen, beispielsweise von weniger als 450°C oder sogar noch geringer, beispielsweise von 400°C oder weniger, ausreichend sind für den Einbrand der wenigstens einen Beschichtung.

Auf diese Weise ist es dann auch einfach möglich, dass die Glasscheibe sehr hohe Biegefestigkeiten aufweist, die beispielsweise mit herkömmlichen, glasbasierten, insbesondere Emaille-Schichten, aber unter Umständen auch mit silikonbasierten Beschichtungen nicht realisiert werden können. Vorteilhaft ist hierfür auch die Kombination der ein Sol-Gel-Bindemittel umfassenden wenigstens einen Beschichtung mit einer Glasscheibe umfassend $SiO_2$ und $B_2O_3$. Die Glasscheibe umfasst, wie vorstehend ausgeführt, ein sogenanntes Borosilikatglas oder ist, in anderen Worten, als Borosilikatglasscheibe ausgebildet. Bei dieser Art von Glasmaterial (oder kurz Glas) handelt es sich um ein chemisch sehr beständiges Material, das auch mechanisch beständig ist und im Vergleich zu herkömmlichen Gläsern wie Kalknatrongläsern eine gute thermische Beständigkeit und bereits auch eine gute mechanische Festigkeit auch in einem nicht vorgespannten Zustand aufweist. Auch hat sich gezeigt, dass die Kratzfestigkeit solcher Borosilikatgläser höher ist als die von Kalknatrongläsern. Zusammen mit der wenigstens einen Beschichtung nach Ausführungsformen kann dabei die bereits gute Festigkeit der Glasscheibe erhalten bzw. vorteilhaft unterstützt und ggf. sogar weiter verbessert werden.

Es ist allgemein möglich, dass eine Beschichtung mehrere Bindemittel umfasst, also beispielsweise hybrid ausgebildet ist. Bekannt sind beispielsweise Beschichtungen, welche neben einer Sol-Gel-Komponente eine glasflussbasierte Komponente oder eine organische, polymerbasierte Komponente umfassen. Dies kann beispielsweise notwendig sein, wenn bestimmte Eigenschaften durch ein Bindemittel alleine nicht erzielt werden können und beispielsweise zur Einstellung einer ausreichenden Dichtigkeit der resultierenden Beschichtung organische Komponenten und Form eines zugesetzten weiteren Bindemittels erforderlich sind.

Dies ist jedoch nach einer bevorzugten Ausführungsform der Offenbarung nicht vorgesehen. Nach dieser bevorzugten Ausführungsform ist es vielmehr vorgesehen, dass die wenigstens eine Beschichtung lediglich ein einziges Bindemittel, vorzugsweise ein als Sol-Gel-Bindemittel ausgebildetes Bindemittel, umfasst.

Gemäß einer Ausführungsform beträgt der flächige Belegungsgrad der wenigstens einen Seite der Glasscheibe mit der wenigstens einen Beschichtung mindestens 10% und höchstens 80%, bevorzugt mindestens 15% und höchstens 65% der gesamten Oberfläche der Seite der Scheibe, auf welche die wenigstens eine Beschichtung aufgetragen ist. Gemäß einer weiteren Ausführungsform ist aber allgemein auch eine vollflächige Belegung oder ein Belegungsgrad von mehr als 80%, beispielsweise von 90% oder 95%, mit der wenigstens einen Beschichtung möglich. Dies empfiehlt sich insbesondere für Anwendungen, bei welchen die Glasscheibe und/oder ein daraus hergestellter Verbund nicht als Sichtscheibe, sondern als Abdeckscheibe eingesetzt wird.

Unter einer Scheibe wird im Rahmen der vorliegenden Offenbarung allgemein ein plattenförmiger Formkörper verstanden. Eine Glasscheibe (die beschichtet und unbeschichtet vorliegen kann) ist eine Scheibe umfassend bzw. aus Glas. Plattenförmig ist ein Formkörper dann, wenn seine räumlichen Abmessungen in einer Raumrichtung eines kartesischen Koordinatensystems wenigstens eine Größenordnung geringer ist als die räumlichen Abmessungen in den beiden weiteren, zur ersten Raumrichtung senkrechten, Raumrichtungen des kartesischen Koordinatensystems. Mit anderen Worten ist die Dicke des Formkörpers wenigstens eine Größenordnung geringer als seine Länge und Breite. Die beiden Hauptflächen oder Hauptoberflächen der Scheibe, also die, deren Größe durch Länge und Breite bestimmt werden, werden im Rahmen der vorliegenden Offenbarung auch abkürzend lediglich Seiten genannt.

Gemäß einer weiteren Ausführungsform beträgt der visuelle Transmissionsgrad, $\tau_{vis}$, in dem wenigstens einen Bereich der Glasscheibe, in welchem die wenigstens eine Beschichtung angeordnet ist, höchstens 10%, bevorzugt höchstens 7% und besonders bevorzugt höchstens 5%, ganz besonders bevorzugt höchstens 1%. Gemäß einer Aus-

führungsform beträgt $\tau_{vis}$ wenigstens 0,01 %, bevorzugt wenigstens 0,05%, und bevorzugt maximal 0,3%. Diese Werte beziehen sich hier auf einen Bereich, in welchem die wenigstens eine Beschichtung die Glasscheibe vollflächig bedeckt.

Die wenigstens eine Beschichtung kann auf der Glasscheibe in dem mindestens einen Bereich deckend, also - bezogen auf den Bereich "vollflächig", also ohne Unterbrechung in der Beschichtung - aufgebracht sein, aber auch beispielsweise in Form eines sogenannten Punktrasters angeordnet sein. Auch Kombinationen dieser Varianten sind möglich. Beispielsweise ist es auch möglich, dass eine vollflächige, also ohne Unterbrechungen der Beschichtung, auf der Glasscheibe angeordnete Beschichtung im Randbereich der Beschichtung, üblicherweise hin zur Mitte der Glasscheibe, in ein Punktraster übergeht. Dies ist beispielsweise eine übliche Ausgestaltung der wenigstens einen Beschichtung, die also in diesem Falle strukturiert auf der Glasscheibe angeordnet ist, für Glasscheiben, die in Fahrzeugfrontscheiben eingesetzt werden.

Gemäß einer weiteren Ausführungsform ist die Glasscheibe so ausgestaltet, dass in wenigstens einem Teilbereich oder innerhalb des gesamten wenigstens einen Bereichs der wenigstens einen Seite der Glasscheibe eine weitere Beschichtung auf der Glasscheibe angeordnet ist, bevorzugt eine glasbasierte Beschichtung, insbesondere eine Emaille-Beschichtung.

Eine solche Ausgestaltung kann vorteilhaft sein, wenn die Vorteile einer Sol-Gel-Beschichtung mit der wenigstens einen Beschichtung realisiert werden sollen, gleichzeitig aber auch Vorteile einer Emaille-Beschichtung gewünscht sind. Gerade für Ausführungen, bei welchen eine besonders gute Kratzfestigkeit des Gesamtschichtaufbaus notwendig und/oder gewünscht ist, kann es daher vorteilhaft sein, auf die wenigstens eine insbesondere als Sol-Gel-Schicht ausgebildete Beschichtung eine weitere Beschichtung aufzubringen, beispielsweise eine Emaillebeschichtung. In diesem Fall wirkt die wenigstens eine Beschichtung, die zuerst aufgebracht wird, als Zwischenschicht und entkoppelt die Emaillebeschichtung vom der Glasscheibe, sodass noch immer sehr gute Festigkeitswerte für die Glasscheibe erhalten werden. Gleichzeitig wirkt die weitere Beschichtung in dem Bereich, in welchem sie die wenigstens eine, zuerst aufgebrachte, Beschichtung abdeckt, als Deckschicht und kann damit beispielsweise die Kratz- und Abriebfestigkeit des Gesamtschichtaufbaus entscheidend verbessern.

Gemäß einer weiteren Ausführungsform umfasst die wenigstens eine Beschichtung umfasst zwischen wenigstens 15 Gew.-% und höchstens 55 Gew.-% Bindemittel, vorzugsweise wenigstens 20 Gew.-%, besonders bevorzugt wenigstens 25 Gew.-%. Dies ist vorteilhaft, weil auf diese Weise ein optimaler Kompromiss zwischen einer guten mechanischen Beständigkeit der wenigstens einen Beschichtung sowie einer guten Deckwirkung und einer ausreichenden Festigkeit der beschichteten Glasscheibe erzielt wird.

Gemäß einer weiteren Ausführungsform umfasst die wenigstens eine Beschichtung zwischen wenigstens 15 Gew.-% und höchstens 30 Gew.-% Pigment, bezogen auf die Summe aller von der wenigstens einen Beschichtung umfassten Pigmente. Dies ist vorteilhaft, weil auf diese Weise eine gute Deckwirkung der wenigstens einen Beschichtung erzielbar ist, gerade auch in einem Einzelschichtaufbau, also einem Aufbau, in dem nur die wenigstens eine Beschichtung zumindest bereichsweise auf der Glasscheibe angeordnet ist.

Der Rest der Beschichtung wird allgemein von Füllstoffen gebildet, beispielsweise nanopartikulären Füllstoffen aus oder umfassend $SiO_2$, aber auch anderen Füllstoffen, wie sie im Rahmen der vorliegenden Offenbarung beschrieben sind. Gerade $SiO_2$-basierte Füllstoffe sind dabei allerdings nur schwer nachweisbar, auch, da sie sich gut mit der Matrix des Bindemittels verbinden, gerade mit der eines Sol-Gel-Bindemittels.

Die wenigstens eine Beschichtung kann dabei allgemein nur ein Pigment umfassen. Unter einem Pigment wird im Rahmen der vorliegenden Offenbarung allgemein ein Farbkörper, insbesondere ein keramischer Farbkörper, verstanden, welcher eine Beschichtung mit einer bestimmten Färbung und/oder einer bestimmten optischen Anmutung, beispielsweise einem sogenannten "Metallic"-Effekt, versieht. Unter den Begriff des Pigments fallen damit im Rahmen der vorliegenden Anmeldung allgemein also sogenannte reine Farbpigmente, insbesondere sogenannte keramische Pigmente, vorzugsweise oxidische Pigmente. Ganz besonders bevorzugt können oxidische Mischoxidpigmente beispielsweise mit Spinellstruktur sein. Weiterhin fallen unter den Begriff des Pigments im Rahmen der vorliegenden Offenbarung auch sogenannte Effektpigmente, beispielsweise auf Glimmerbasis, sowie auch sonstige Effektpigmente, insbesondere Effektpigmente, bei welchen ein plättchenförmiges Substrat aus einem oxidischen Material oder auf Glimmerbasis beschichtet vorliegt. Im Rahmen der vorliegenden Anmeldung wird allgemein unter der Aussage, dass eine Beschichtung, wie beispielsweise die wenigstens eine Beschichtung nach Ausführungsformen, oder eine Paste, beispielsweise eine Paste nach Ausführungsformen, ein Pigment umfassen, dass sie einen partikulären Farbkörper umfassen, welcher also Partikel umfasst, wobei diese Partikel die Zusammensetzung des entsprechenden Pigments aufweisen. Sofern also im Rahmen der vorliegenden Offenbarung davon die Rede ist, dass eine Beschichtung oder eine Paste mehrere Pigmente umfassen, wird darunter verstanden, dass die Beschichtung und/oder die Paste unterschiedliche zusammengesetzte Pigmentpartikel umfassen, nämlich entsprechend der Zusammensetzung der von der Beschichtung/der Paste umfassten Pigmente.

Die wenigstens eine Beschichtung kann nur ein einziges Pigment umfassen. Es ist aber möglich und kann auch bevorzugt sein, dass die wenigstens eine Beschichtung mehrere Pigmente umfasst. Beispielsweise kann vorgesehen sein, dass die wenigstens eine Beschichtung ein Weißpigment umfasst sowie ein Schwarzpigment, um gegebenenfalls chargenbedingte Schwankungen im Farbort der verwendeten Pigmente auf übliche Weise kompensieren zu können. Vorteilhafterweise kann die wenigstens eine Beschichtung auch ein weiteres Pigment umfassen, beispielsweise ein Effektpigment, denn solche Effektpigmente, häufig auf Plättchenbasis, können sich vorteilhaft auf die Eigenschaften einer Beschichtung, wie beispielsweise deren Glätte/Oberflächenbeschaffenheit, und damit auch deren mechanischer Festigkeit, wie Kratz- und Abriebbeständigkeit, auswirken.

Gemäß einer Ausführungsform weist das Glas der Glasscheibe, gemäß einer Ausführungsform also das von der Glasscheibe umfasste Borosilikatglas, einen linearen thermischen Ausdehnungskoeffizienten zwischen $2 * 10^{-6}$/K und $6 * 10^{-6}$/K auf. Es handelt sich hierbei also um einen Glas mit einer im Vergleich zu herkömmlichen Kalk-Natron-Glas relativ geringen thermischen Dehnung. Auf diese Weise ist auch eine Ausgestaltung der Glasscheibe als aus einem der bekannten, niedrigdehnenden Borosilikatgläser möglich. Dies ist insbesondere deshalb vorteilhaft, weil diese Borosilikatgläser bereits intrinsisch eine recht hohe Glasfestigkeit mit sich bringen. Weiterhin weisen solche Gläser auch eine recht gute thermische Beständigkeit auf und sich auch chemisch recht resistent.

Gemäß einer weiteren Ausführungsform umfasst das Glas der Glasscheibe wenigstens 60 Gew.-% $SiO_2$ bis höchstens 85 Gew.-% $SiO_2$ und/oder wenigstens 7 Gew.-% $B_2O_3$ bis höchstens 26 Gew.-% $B_2O_3$. Solche Gläser sind gut schmelzbar, weisen aber gleichzeitig im Vergleich beispielsweise zu herkömmlichen Kalk-Natron-Gläsern eine verbesserte chemische Beständigkeit, Härte und Festigkeit auf. Sie sind daher insbesondere gut geeignet, für besonders mechanisch beanspruchte Bereiche eingesetzt zu werden, insbesondere beispielsweise auch als Sichtscheibe in einem Fahrzeug, beispielsweise eine Windschutzscheibe. Solche Gläser sind auch deshalb vorteilhaft, weil sie einen guten Kompromiss zwischen guter mechanischer, chemischer und thermischer Beständigkeit einerseits und guter Schmelzbarkeit andererseits bieten, ohne dass Entmischungstendenzen und/oder zu hohe Viskosität der Glasschmelze störend wirken. Glasscheiben aus solchen Gläsern, wie beispielsweise Borosilikatgläser mit einem niedrigen thermischen Ausdehnungskoeffizienten in den vorstehend genannten Grenzen und/oder mit den Komponenten in den vorgenannten Grenzen sind daher gemäß Ausführungsformen der Offenbarung besonders bevorzugt.

Gemäß einer weiteren Ausführungsform weist die wenigstens eine Beschichtung einen linearen thermischen Ausdehnungskoeffizienten zwischen mindestens $3 * 10^{-6}$/K und höchstens $10 * 10^{-6}$/K auf, bevorzugt von weniger als $9 * 10^{-6}$/K, besonders bevorzugt von weniger als $7,5 * 10^{-6}$/K, ganz besonders bevorzugt von weniger als $6 * 10^{-6}$/K. Vorteilhaft kann diese Ausführungsform dabei insbesondere mit solchen Ausführungen der Glasscheibe verknüpft werden, bei welchen der lineare thermische Ausdehnungskoeffizient des Glases der Glasscheibe ebenfalls begrenzt ist und zwischen $2 * 10^{-6}$/K und $6 * 10^{-6}$/K liegt. Auf diese Weise können nämlich auf besonders einfache Weise Glasscheiben umfassend eine pigmentierte Beschichtung umfassend ein Sol-Gel-Bindemittel umfassend $SiO_2$ erhalten werden, welche eine ausreichende Biegefestigkeit aufweisen. Allerdings ist es allgemein auch möglich, Beschichtungen mit linearen thermischen Ausdehnungskoeffizienten in den vorgenannten Grenzen mit Glasscheiben zu kombinieren, welche einen deutlichen höheren, abweichenden linearen thermischen Ausdehnungskoeffizienten aufweisen und umgekehrt. Hier werden dann allerdings andere Maßnahmen zum Ausgleich des Ausdehnungskoeffizientenunterschieds vorgenommen werden. Beispielsweise kann dies, wie auch vorstehend bereits beschrieben, durch eine sogenannte Anpassungsschicht oder Zwischenschicht als weitere Beschichtung erfolgen.

Sofern im Rahmen der vorliegenden Anmeldung auf den thermischen Ausdehnungskoeffizienten Bezug genommen wird, wird hierunter der lineare thermische Ausdehnungskoeffizient $\alpha$ verstanden. Sofern nicht anders ausgeführt, ist dieser im Bereich von 20-300°C angegeben. Die Bezeichnungen $\alpha$ und $\alpha_{20-300}$ werden im Rahmen dieser Erfindung synonym verwendet. Dieser kann insbesondere für glasige Materialien bestimmt werden in einer Methode nach ISO 7991. Unter dem thermischen Ausdehnungskoeffizienten der Beschichtung wird dabei jeweils der resultierende thermische Ausdehnungskoeffizient der entsprechenden Beschichtung verstanden, der sich aus den thermischen Ausdehnungskoeffizienten der einzelnen Bestandteile der Beschichtung unter Berücksichtigung ihres Anteils an der Beschichtung ergibt. Sofern im Rahmen der vorliegenden Anmeldung auf den thermischen Ausdehnungskoeffizienten der Glasscheibe abgestellt wird, ist dabei immer der thermische Ausdehnungskoeffizient des glasigen Materials (oder Glases) der Glasscheibe (also des Substrats) gemeint.

Gemäß einer weiteren Ausführungsform weist die Glasscheibe eine Dicke zwischen mindestens 1 mm und höchstens 12 mm auf. Dies stellt einen guten Kompromiss dar zwischen einer ausreichenden Festigkeit und einem noch geringen Gewicht der verwendeten Glasscheibe, insbesondere wenn die Glasscheibe dafür bestimmt ist, in einem Verbund mit einer weiteren Scheibe verwendet zu werden.

Gemäß einer weiteren Ausführungsform ist die wenigstens eine Beschichtung mikroporös ausgebildet und/oder weist höchstens Poren mit einer maximalen lateralen Abmessung, beispielsweise einem Durchmesser, von 1 μm auf. Überraschenderweise hat sich gezeigt, dass Beschichtung auf Emaillebasis, welche vergleichbare Festigkeiten der beschichteten Glasscheibe bei gleicher Belegung mit der wenigstens einen Beschichtung ermöglichen, eine deutlich andere Porenstruktur aufweisen. Es hat sich nämlich gezeigt, dass Emailleschichten, welche eine zumindest ansatzweise vergleichbare Festigkeit (in der Regel wird diese aber stets geringer sein, als dies mit einer Beschichtung nach Ausführungsformen der Fall ist) der bereichsweise beschichteten Glasscheibe ermöglichen, eine recht hohe Porosität mit Porenabmessungen von mehr als 1 μm als maximaler lateraler Abmessung aufweisen, oft mit maximalen lateralen Abmessungen von mehreren Mikrometern. Solche Beschichtungen sind dann also makroporös ausgebildet. Vermehrt können solche Poren dann gerade an der Grenzfläche zwischen Beschichtung und Glasscheibe, also zwischen Beschichtung und Substrat, ausgebildet sein. Die Struktur der Beschichtung nach Ausführungsformen ist hingegen deutlich anders und weist nur wenige, kleine Poren auf. Unter der maximalen lateralen Abmessung einer Pore wird dabei deren größte Ausdehnung verstanden. In der Regel sind die Poren ellipsoidförmig ausgebildet, oft mit nur geringer Abweichung von einer Kugelform. Die maximale laterale Abmessung kann daher näherungsweise auch als Durchmesser der Poren bezeichnet werden.

Gemäß einer nochmals weiteren Ausführungsform weist die Glasscheibe in dem wenigstens einem Bereich, in welchem die wenigstens eine Beschichtung angeordnet ist, für die vorstehend angegebenen Dicken der Beschichtung eine optische Dichte von wenigstens 1 und höchstens 4,5, beispielsweise höchstens 3, auf. Die optische Dichte oder Farbdichte wird benutzt, um das Absorptionsverhalten einer Beschichtung im Vergleich zu einem "Absolutweiß" zu charakterisieren. Je dichter die Farbschicht ist, umso weniger Licht kann durch sie hindurchtreten. Die optische Dichte wird nach folgender Formel berechnet:

$$ D = \log\left(\frac{1}{R}\right) $$

R ist hierbei der Remissionsgrad. Bestimmt wird die optische Dichte mit Densitometern, insbesondere im Rahmen der vorliegenden Offenbarung in senkrechter Richtung zur größten flächigen Erstreckung der Beschichtung und somit der beschichteten Oberfläche der beschichteten Glasscheibe. Je höher die optische Dichte ist, desto weniger durchlässig erscheint die Beschichtung. Diese kann insbesondere vorteilhaft mit einem hohen Pigmentgehalt und/oder durch die Art und Menge der ausgewählten Pigmente in der wenigstens einen Beschichtung erzielt werden und gerade mit Pigmentgehalten eher im oberen Bereich des vorstehend genannten Bereichs zwischen 0 Gew.-% und 30 Gew.-% Pigment erzielt werden.

Die vorliegende Offenbarung betrifft auch eine Paste. Insbesondere betrifft die vorliegende Offenbarung eine Paste zum Herstellen einer Beschichtung, welche als wenigstens eine Beschichtung auf Glasscheiben nach Ausführungsformen angeordnet ist, und ist somit auch geeignet zum Herstellen einer Glasscheibe nach Ausführungsformen, welche also wenigstens eine bereichsweise auf wenigstens einer Seite der Glasscheibe angeordnet ist. Die Paste umfasst wenigstens ein Bindemittel umfassend $SiO_2$, wenigstens ein Pigment, wenigstens ein Medium und vorzugsweise wenigstens einen als Füllstoff ausgebildeten Zusatzstoff. Das Bindemittel umfassend $SiO_2$ ist als Sol-Gel-Bindemittel ausgebildet, umfassend wenigstens eine durch Hydrolyse und Kondensation wenigstens einer halborganischen Siliziumoxid-Vorläuferphase vernetzte $SiO_2$-Phase, wobei unter einer halborganischen Siliziumoxid-Vorläuferphase eine Silizium-Verbindung verstanden wird, bei welche an das Silizium-Atom direkt oder über ein Sauerstoff-Brückenatom ein organischer Rest gebunden ist, insbesondere ein Alkyl-Rest. Die Paste ist dadurch gekennzeichnet, dass das Bindemittel weniger als 500 ppm $Bi_2O_3$ und/oder weniger als 500 ppm ZnO umfasst. Nach einer Ausführungsform kann das Bindemittel auch zusätzlich weniger als 500 ppm $B_2O_3$ und/oder weniger als 500 ppm eines Alkalioxides aufweisen, wobei hier die zuvor hinsichtlich der Glasscheibe getroffenen Ausführungen zum Bindemittel allgemein in entsprechender Weise auch für das Bindemittel der Paste gelten.

Das Medium kann allgemein auch als Dispersionsmedium bezeichnet werden. Wie ausgeführt, kann mittels einer solchen Paste vorteilhaft eine Glasscheibe nach Ausführungsformen erhalten werden.

Nach einer Ausführungsform ist die Paste allgemein so ausgebildet, dass das Bindemittel umfassend $SiO_2$ als Sol-Gel-Bindemittel ausgebildet ist, umfassend wenigstens eine durch Hydrolyse und Kondensation wenigstens einer halborganischen Siliziumoxid-Vorläuferphase vernetzte $SiO_2$-Phase, wobei unter einer halborganischen Siliziumoxid-Vorläuferphase eine Silizium-Verbindung verstanden wird, bei welcher an das Silizium-Atom direkt oder über ein Sauerstoff-Brückenatom ein organischer Rest gebunden ist, insbesondere ein Alkyl-Rest. Dies ist ganz besonders vorteilhaft, denn auf diese Weise besteht hinsichtlich der Zusammensetzung des Bindemittels trotz der Beschränkung auf eine im Wesentlichen reine $SiO_2$-Chemie, worunter verstanden wird, dass vorzugsweise wenigstens 90 Gew.-% des anorganischen Bestandteils des Bindemittels von $SiO_2$ gebildet wird, eine große Flexibilität. Solche halborganischen Siliziumoxid-Vorläuferphasen sind nämlich flexibel verwend- und vernetzbar und können auch mit weiteren $SiO_2$-Vorläufermaterialien, beispielsweise vorkondensierten und dispergierten $SiO_2$-Nanopartikeln, wie sich kommerziell beispielsweise unter dem Handelsnamen "Levasil" bekannt sind, kombiniert werden, oder mit anderen Dispersionen von Nanopartikeln, insbesondere $SiO_2$-Nanopartikeln, wie nachfolgend auch noch ausgeführt wird. Auch ist es möglich, solche Vorläuferphasen zu verwenden, bei welchen das Silizium-Atom vier Sauerstoffbrückenatome aufweist, aber auch solche, bei welchen wenigstens ein organischer Rest direkt an das Silizium-Atom gebunden ist. besonders bevorzugt sind dabei, wie vorstehend ausgeführt, Alkyl-Reste. Gerade eine Alkylgruppe, gerade eine Methylgruppe, die direkt an das zentrale Silizium-Atom gebunden ist, kann vorteilhaft sein, weil auf diese Weise die Beschichtung eine gewisse inhärente Dichtigkeit und Beständigkeit gegenüber Wasser und Wasserdampft mit sich bringt und gleichzeitig mit organischen Bestandteilen beispielsweise einer Laminatfolie gut kompatibel sein kann. Dabei ist von besonderer Bedeutung, dass gerade eine Methylgruppe eine besonders hohe Temperaturbeständigkeit hat und deshalb bevorzugt zum Einsatz kommen kann. Alternativ könnte auch eine Phenylgruppe substituiert sein, die jedoch weniger temperaturstabil ist und bei einer Zersetzung ggf. auch gesundheitsgefährdend sein kann. Allgemein ist es bevorzugt, wenn höchstens zwei organische Gruppen pro Siliziumatom im Precursor vorhanden sind, um eine Netzwerkbildung effizient zu ermöglichen. Bevorzugt ist eine organische Gruppe pro Siliziumatome, wie beispielsweise in dem Precursor/der Vorläuferphase Methyl-triethoxy-Silikat.

Die Paste umfasst gemäß einer Ausführungsform zwischen wenigstens 10 Gew.-% und höchstens 40 Gew.-%, bevorzugt wenigstens 15 Gew.-% und höchstens 30 Gew.-%, Zusatzstoff, vorzugsweise einen Füllstoff, bezogen auf das Gesamtgewicht der Paste und bezogen auf die Summe der von der Paste umfassten Zusatzstoffe, vorzugsweise Füllstoffe.

Auf diese Weise wird ein sehr vorteilhafter Kompromiss zwischen der Verbesserung Pasteneigenschaften und/oder Eigenschaften der resultierenden Beschichtung durch die Zugabe von Füllstoffen und dem Einstellen eines dichten, möglichst dunklen und farbneutralen Farborts der resultierenden Beschichtung erzielt. Denn ein Zuviel an Füllstoffen kann gegebenenfalls auch nachteilig auf die Deckwirkung der verwendeten Pigmente wirken.

Hinsichtlich eines Füllstoffs wird hierbei verstanden, dass dieser ein partikulärer Stoff ist, also Partikel umfasst, wobei diese Partikel die Zusammensetzung des entsprechenden Füllstoffs aufweisen. Sofern also im Rahmen der vorliegenden Offenbarung davon die Rede ist, dass eine Beschichtung oder eine Paste mehrere Füllstoffe umfasst, wird darunter verstanden, dass die Beschichtung und/oder die Paste unterschiedlich zusammengesetzte Füllstoffpartikel umfassen, nämlich entsprechend der Zusammensetzung der von der Beschichtung/der Paste umfassten Füllstoffe.

Gemäß einer Ausführungsform umfasst die Paste einen Füllstoff mit einem linearen thermischen Ausdehnungskoeffizienten zwischen $-10 * 10^{-6}$/K und $+10 * 10^{-6}$/K, also einen, welcher vorzugsweise einen relativ geringen linearen thermischen Ausdehnungskoeffizienten aufweist. Insbesondere kann es sich um eine vorzugsweise pyrogene Kieselsäure, allgemein um $SiO_2$-basierte Partikel oder um Graphit handeln. Ein solcher relativ geringer linearer thermischer Ausdehnungskoeffizient zwischen $-10 * 10^{-6}$/K und $+10 * 10^{-6}$/K ist, bevorzugt zwischen $-8 * 10^{-6}$/K und $+5 * 10^{-6}$/K, besonders bevorzugt zwischen $-6,5 * 10^{-6}$/K und $+3* 10^{-6}$/K, ist insbesondere vorteilhaft für ein Bindemittel, wie dies bei der wenigstens einen Beschichtung nach Ausführungsformen verwendet wird, nämlich ein Bindemittel umfassend $SiO_2$. Auf diese Weise ist eine gute Einbindung des Füllstoffs in die Beschichtung sichergestellt und dieser kann die Stabilität der Beschichtung, also hier insbesondere wenigstens einen Beschichtung der Glasscheibe nach der vorliegenden Offenbarung, weiter verbessern, beispielsweise hinsichtlich Kratz- und/oder Abriebfestigkeit.

Füllstoffe als Bestandteil einer Paste, beispielsweise einer Sol-Gel-Paste, sind allgemein bereits seit langem bekannt. Solche Füllstoffe können die Eigenschaften einer sie umfassenden Paste sowie auch der daraus resultierenden Beschichtung auf vielfältige Weise beeinflussen und insbesondere verbessern, indem sie beispielsweise die Vernetzung einer Sol-Gel-Matrix verbessern können.

Möglich ist auch die Verwendung von Füllstoffen, die beispielsweise in einer Paste als Rheologieadditiv dienen, gleichzeitig aber auch gut in die aus dieser resultierenden Beschichtung integrierbar sind und hier weitere Funktionen, beispielsweise die einer Verbesserung des Abriebs der Beschichtung, aufweisen. Gerade bei Sol-Gel-Pasten und daraus resultierenden Beschichtung ist der Einsatz von Füllstoffen als Rheologieadditiv bekannt.

Wie ausgeführt, ist es nach einer Ausführungsform auch möglich, dass die Paste einen weiteren Zusatzstoff, beispielsweise einen Füllstoff, umfasst. Vorzugsweise kann es sich im Fall, dass die Paste zwei oder drei Füllstoffe umfasst, bei diesem weiteren Füllstoff wie ausgeführt vorzugsweise ebenfalls einen Füllstoff mit einem recht niedrigen linearen thermischen Ausdehnungskoeffizienten, beispielsweise mit einem linearen thermischen Ausdehnungskoeffizienten zwischen $-10 * 10^{-6}$/K und $+10 * 10^{-6}$/K ist, bevorzugt zwischen $-8 * 10^{-6}$/K und $+5 * 10^{-6}$/K, besonders bevorzugt zwischen $-6,5 * 10^{-6}$/K und $+3* 10^{-6}$/K.

Wie auch vorstehend ausgeführt, können Füllstoffe mit einem thermischen Ausdehnungskoeffizienten im vorgenannten Bereich allgemein, ob als alleiniger Füllstoff oder auch beim Vorhandensein mehrere Füllstoffe, besonders vorteilhaft für die Ausbildung der Eigenschaften der wenigstens einen Beschichtung und in entsprechender Weise auch der Eigenschaften der Glasscheibe sein. Zudem können solche Füllstoffe, insbesondere im Falle der Kieselsäure, vorteilhafte Eigenschaften für die Paste selbst mit sich bringen, indem sie beispielsweise auch die Einstellung der Viskosität ermöglichen oder unterstützen, beispielsweise einer Viskosität, welche für den Auftrag mittels eines Druckverfahrens wie Siebdruck geeignet ist.

Weiterhin kann die Ausbildung des Füllstoffs als niedrigdehnender Füllstoff ebenfalls vorteilhaft sein. Allerdings ist es nicht zwingend notwendig, dass der Füllstoff einen sehr niedrigen linearen thermischen Ausdehnungskoeffizienten aufweist. Wie ausgeführt, kann der Füllstoff ja Graphit sein, welcher in diesem Fall weitere Vorteile aufweist, welche den relativ hohen thermischen Ausdehnungskoeffizienten dieses Materials im Vergleich zu amorpher Kieselsäure aufwiegen, insbesondere wenn man berücksichtigt, dass das Bindemittel selbst einen eher niedrigen thermischen Ausdehnungskoeffizienten aufweisen dürfte und das Material der Glasscheibe nach einer Ausführungsform selbst einen linearen thermische Ausdehnungskoeffizienten im Bereich zwischen $2*10^{-6}$/K und $6*10^{-6}$/K aufweisen kann.

Allgemein können also, wie auch vorstehend bereits ausgeführt, Füllstoffe sehr unterschiedliche Funktionen in einer Paste und/oder in der daraus resultierenden Beschichtung erfüllen. Für die Herstellung der wenigstens einen Beschichtung der Glasscheibe nach Ausführungsformen der Offenbarung hat sich gezeigt, dass es besonders vorteilhaft sein kann, wenn die Paste zwei Arten von Füllstoffen umfasst. Selbstverständlich kann auch die resultierende Beschichtung diese beiden Füllstoffe umfassen, insbesondere im Fall von hochtemperaturstabilen Füllstoffen, wobei jedoch im Einzelfall und gerade bei eher geringen Füllstoffgehalten der Nachweis in der Beschichtung selbst unter Umständen schwierig sein kann.

Beispielsweise kann nach einer Ausführungsform ein Füllstoff eine Kieselsäure, insbesondere eine pyrogene Kieselsäure, sein. Eine solche Ausgestaltung ist vorteilhaft, weil pyrogene Kieselsäure - also mit anderen Worten chemisch betrachtet amorphes $SiO_2$ - nicht nur ein bekanntes Material mit guter Verfügbarkeit ist, sondern auch in einer Paste vorteilhafte Eigenschaften, beispielsweise als Rheologieadditiv, wahrnehmen kann. Auf diese Weise entfällt die Notwendigkeit, beispielsweise organisch modifizierte Rheologieadditive einsetzen zu müssen, die gegebenenfalls nur schwer aus der resultierenden Beschichtung wieder entfernt werden können, was im späteren Einsatz der Glasscheibe gegebenenfalls zu unschönen Verfärbungen oder sonstigem Versagen der Beschichtung führen könnte. Weiterhin verbleibt eine pyrogene Kieselsäure in der Beschichtung und kann aufgrund der guten Einbindung in eine Sol-Gel-Matrix auf Basis von $SiO_2$, wie vorliegend bei den Glasscheiben nach der vorliegenden Offenbarung, auch die gute Vernetzung der Beschichtung innerhalb der Beschichtung selbst und auch zum Substrat weiter fördern. Da pyrogene Kieselsäure als amorphes $SiO_2$ selbst nur einen geringen thermischen Ausdehnungskoeffizienten aufweist und weiterhin in einer Vielzahl von Varianten darstellbar ist, sind auf diese Weise die Eigenschaften der resultierenden Beschichtung gezielt beeinflussbar. Ein als Kieselsäure ausgebildeter Füllstoff ist daher gemäß einer Ausführungsform besonders vorteilhaft. Gerade hier zeigt sich im Übrigen, dass der Füllstoff auch in der resultierenden Beschichtung vorhanden ist, jedoch im Falle einer ganz überwiegend aus $SiO_2$ ausgebildeten Beschichtungsmatrix nicht als solches mehr nachweisbar ist. Der Einfluss des Füllstoffs zeigt sich aber in den resultierenden vorteilhaften Eigenschaften der so erhaltenen Beschichtung.

Eine weitere Kategorie von Füllstoffen sind, gerade im Bereich pigmentierter Sol-Gel-Beschichtungen, sogenannte "Schmierstoffe". Unter einem "Schmierstoff" wird dabei im Sinne der vorliegenden Offenbarung ein Feststoff verstanden, welcher eine "schmierende" Wirkung analog der Wirkung von Talkum aufweist. Diese Wirkung kommt dadurch zustanden, dass der betreffende als Schmierstoff ausgebildete Füllstoff selbst über eine plättchenförmige Struktur verfügt. Bekannte, in Sol-Gel-Beschichtungen eingesetzte und vorteilhafte Füllstoffe sind beispielsweise Graphit oder Bornitrid. Nach einer Ausführungsform umfasst die Paste als Füllstoff vorzugsweise Graphit. Auch dieser ist ausreichend temperaturstabil, sodass er auch von der resultierenden Beschichtung umfasst wird. Allerdings ist er nicht gut nachweisbar, insbesondere wegen der geringen Ordnungszahl von Kohlenstoff, weswegen er beispielsweise in einer EDX-Analyse nicht gut sichtbar gemacht werden kann.

Die vorteilhafte Wirkung eines Schmierstoffs wie Graphit oder Bornitrid, der sich gerade in den resultierenden guten Eigenschaften der Beschichtung zeigt, ist seitens der Erfinder nicht vollständig verstanden. Jedoch hat sich gezeigt, dass solche Füllstoffe mit plättchenförmiger Struktur, insbesondere mit einem bezogen auf die Kristallstruktur der betrachteten Füllstoffe graphitartigen Aufbau, für die Ausbildung besonders beständiger Sol-Gel-basierter Beschichtungen vorteilhaft sein können.

Solche Schmierstoffe weisen jedoch auch einige Nachteile auf. Bislang war bekannt, dass solche Füllstoffe insbesondere bei einer Sol-Gel-Beschichtung insbesondere dann die gewünschten Eigenschaften bewirken können, wenn in der Paste (und entsprechend auch in der resultierenden Beschichtung) ein bestimmtes Verhältnis zwischen verwendetem Pigment und dem Schmierstoff vorliegt, welches zwischen 10:1 und 1:1, bezogen auf das Gewicht, lag.

Im Fall von Graphit als Füllstoff kann dies zwar für einige positive Eigenschaften der resultierenden Sol-Gel-Beschichtungen sorgen, führt jedoch auch zu einigen unerwünschten Eigenschaften. Da Graphit selbst eine Färbung aufweist, sind auf diese Weise nur relativ dunkle Farben für die entsprechenden Beschichtungen möglich, wobei es doch wieder schwierig ist, mit solchen relativ hohen Gehalten an Graphit eine wirklich dunkle, schwarze Färbung zu erzielen. Da die verwendeten Pigmente nach dem Stand der Technik zumeist auch Effektpigmente betrafen, war die Farbpalette mit Graphit als Schmierstoff bislang sehr eingeschränkt und betraf zumeist Pasten, aus denen hell- bis dunkelgraue Beschichtungen mit einem "Metallic"-Effekt hergestellt wurden. Zudem waren bei einem sehr hohen Anteil von Graphit, der einerseits für die Ausbildung vorteilhafter mechanischer Eigenschaften der Schicht wie einer guten Haft-, Kratz- und Abriebfestigkeit sowie einer guten Dichtigkeit vorteilhaft war, die Schicht auch meist leitfähig ausgebildet, was für bestimmte Anwendungen unerwünscht war.

Eine Alternative zur Verwendung von Graphit als Schmierstoff kann darin bestehen, beispielsweise Bornitrid zu verwenden, welches auch als "weißer Graphit" bezeichnet werden kann. Verbunden damit ist aber die Ausbildung einer eher weißen bzw. hellen Schicht, was für maskierende Beschichtungen, beispielsweise bei den Rahmen von Glasscheiben, die für die Verwendung als Autoscheibe in einem Scheibenverbund angedacht sind, ungünstig sein kann. Außerdem ist Bornitrid in der Herstellung teuer und daher aus Energieeffizienz- und Kostengründen ungünstig.

Schließlich ist noch darauf hinzuweisen, dass die Benetzung solcher mit Schmierstoff versehener Beschichtung schwierig sein kann. Dies kann einerseits für bestimmte Anwendungen günstig sein, doch wird befürchtet, dass ein zu hoher Anteil an solchen als Schmierstoffen ausgebildeten Füllstoffen, wie er im vorbekannten Stand der Technik genannt ist, ungünstig sein kann, insbesondere hinsichtlich einer späteren Laminierung einer Glasscheibe, welche mit einer Beschichtung umfassend Schmierstoffe versehen ist. Damit besteht also für Pasten zur Herstellung von Beschichtungen für Glasscheiben, welche beispielsweise in einem Verbund verwendet werden und bei denen auch dunkle Farben, insbesondere ein dunkles Schwarz, erzielt werden soll, ein besonderer Bedarf.

Überraschenderweise hat sich gezeigt, dass nach einer besonders bevorzugten Ausführungsform bereits deutlich geringere Mengen an einem Schmierstoff als bislang bekannt in einer Paste und entsprechend in einer resultierenden wenigstens einen Beschichtung einer Glasscheibe nach Ausführungsformen ausreichend sein können. Im Falle des Vorliegens des Füllstoffs als Schmierstoff beträgt nach dieser bevorzugten Ausführungsform das Verhältnis von Pigment zu Schmierstoff mehr als 20:1, vorzugsweise mehr als 30:1 und insbesondere vorzugsweise mehr als 40:1, bezogen auf das Gesamtgewicht der von der Paste bzw. der resultierenden Beschichtung umfassten Summe der Pigmente und der Summe der als Schmierstoff ausgebildeten Füllstoffe, jeweils bezogen auf den Gewichtsanteil der jeweiligen Bestandteile. Auf diese Weise ist nicht nur eine größere Designfreiheit, beispielsweise bei der Bereitstellung bestimmter Farben, für eine resultierende Beschichtung gegeben. Vielmehr werden auf diese Weise überraschend sowohl vorteilhafte mechanische Eigenschaften wie eine noch immer ausreichende Kratzfestigkeit einer entsprechend hergestellten Beschichtung, wie der wenigstens einen Beschichtung auf einer Glasscheibe nach Ausführungsformen der Offenbarung, ermöglicht, während gleichzeitig Nachteile bekannter Schichten des Standes der Technik vermieden werden können. Insbesondere sind die auf diese Weise erhaltenen Glasscheiben umfassend wenigstens eine Beschichtungen gut geeignet, um in einem Laminierverfahren mit einer weiteren Glasscheibe zu einem festen Verbund zu werden, welcher den Anforderungen beispielsweise an die Scheibe eines Fahrzeugs genügt.

Nach einer Ausführungsform umfasst die Paste bis zu 50 Gew.-% eines Lösungsmittels, vorzugsweise eines hochsiedenden Lösungsmittels mit einem Siedepunkt von wenigstens 130°C und bevorzugt höchstens 330°C, beispielsweise höchstens 220°C.

Insbesondere kann das Lösungsmittel Diethylenglycolmonoethylether sein oder diesen umfassen. Eine solche Ausgestaltung ist besonders günstig für Druckfarben, da auf diese Weise eine gut beispielsweise mittels Siebdruck verdruckbare Paste entsteht, bei der es zu keinem Eintrocknen der Paste auf dem Sieb kommt.

Gemäß einer nochmals weiteren Ausführungsform umfasst die Paste eine Lösung einer Cellulose, beispielsweise einer Ethylcellulose, vorzugsweise in einem Gehalt zwischen 5 Gew.-% und 10 Gew.-%, bezogen auf das Gesamtgewicht der Paste. Die Cellulose kann beispielsweise in einem hochsiedenden Lösungsmittel gelöst sein, beispielsweise Diethylenglycolmonoethylether.

Eine solche Ausgestaltung einer Paste ist in den zitierten Schriften des Standes der Technik nicht genannt. Bislang war man nämlich davon ausgegangen, dass eine Cellulose, welche beispielsweise vorteilhaft zur Einstellung einer Viskosität der Paste, die besonders vorteilhaft für Siebdruck ist, nicht gut in Sol-Gel-basierten Pasten verwendet werden kann. Dies liegt daran, dass üblicherweise halborganische $SiO_2$-Verbindungen zumeist sauer ankondensiert werden, also der pH-Wert einer solchen Paste relativ niedrig ist, insbesondere unter 7 liegt und damit im sauren Bereich. Cellulose zersetzt sich allerdings in solchen sauren Lösungen, sodass auf diese Weise nur Pasten mit wenigen Tagen Topfzeit erhalten werden konnten.

Wie vorstehend bereits zur wenigstens einen Beschichtung ausgeführt, ist die Ausbildung des Bindemittels als $SiO_2$-umfassendes Sol-Gel-Bindemittel allgemein sehr vorteilhaft. $SiO_2$-umfassende Bindemittel können wie ausgeführt beispielsweise durch eine Hydrolyse-Kondensations-Reaktion aus siliziumorganischen Precursoren oder Vorläuferverbindungen erhalten werden, beispielsweise durch die sauer katalysierte Hydrolyse und Kondensation von Verbindungen wie Tetraethylorthosilikat (TEOS) oder verwandten oder ähnlichen Verbindungen, wobei eine große Variation bei der Herstellung solcher Bindemittel besteht und auch eine Mischung unterschiedlicher Precursoren möglich ist, beispielsweise die Zugabe überwiegend anorganischer, partikelbasierter Sole oder die Zugabe sogenannter Polysiloxane und/oder Silikone, die im Rahmen dieser Offenbarung alle unter den großen Begriff des "Sol-Gel-Bindemittels" subsumiert werden.

Der Vorteil der Sol-Gel-Bindemittel aus oder umfassend $SiO_2$ ist nicht nur ihre große Flexibilität in der Zusammenstellung, sondern auch ihre gute Kompatibilität mit glasartigen Substraten wie Glas und Glaskeramik unterschiedlichster Zusammensetzung. Gerade für Glas- oder Glaskeramiksubstrate mit niedrigem thermischen Ausdehnungskoeffizienten kann ein solches Bindemittel vorteilhaft sein, da auf diese Weise nicht nur eine gute Anbindung einer Beschichtung, wie beispielsweise der wenigstens einen Beschichtung der Glasscheibe nach der Offenbarung, gegeben ist, sondern durch $SiO_2$ als Bindemittel auch ein niedriger linearer thermischer Ausdehnungskoeffizient der Beschichtung erhalten werden kann.

Pasten, mittels denen Sol-Gel-basierte Beschichtungen erhalten werden können, sind beispielsweise in der US 2010/0028629 A2 beschrieben. Auch die US 2010/0047556 A2 nennt ähnlich aufgebaute Sol-Gel-Pasten. Schließlich beschreibt auch die US 2009/0233082 A2 Pasten, mit denen Sol-Gel-basierte Beschichtungen erhalten werden können.

Allerdings sind die in den vorstehenden Patentanmeldungen genannten Beschichtungen nicht geeignet für die Herstellung einer Glasscheibe nach Ausführungsformen. Die dort beschriebenen Pasten sind vielmehr gedacht für die Herstellung von Beschichtungen auf einem zumeist glaskeramischen Substrat mit einer sehr geringen Dehnung, vorzugsweise ein Substrat mit einem linearen thermischen Ausdehnungskoeffizienten von weniger als $2*10^{-6}$/K, nämlich LAS-Glaskeramiken mit niedriger thermischer Dehnung, wie sie beispielsweise auch für Kochfelder verwendet werden. Die besonderen Schwierigkeiten, die sich bei der Beschichtung eines solchen Substrats mit einer niedrigen Dehnung ergeben, führen dazu, dass die Pasten und in entsprechender Weise die darauf resultierenden Beschichtungen anders zusammengesetzt sind und eine andere Struktur aufweisen, als dies für eine Glasscheibe nach Ausführungsformen, die auch geeignet sein soll, als Glasscheibe in einem Verbund einer Fahrzeugverglasung eingesetzt zu werden, geeignet ist.

Insbesondere umfassen die Schichtsysteme, welche in den vorstehenden Schriften des Standes der Technik genannt sind, zumeist zwei Schichten, die in separaten Beschichtungsverfahren aufgebracht werden, und weisen gerade hinsichtlich des Verhältnisses einzelner Komponenten der Paste und - in entsprechender Weise - der resultierenden Beschichtung deutliche Unterschiede auf.

Gemäß einer Ausführungsform umfasst die Paste zwischen wenigstens 15 Gew.-% und höchstens 30 Gew.-% Pigment, bezogen auf das Gesamtgewicht der Paste und bezogen auf die Summe der von der Paste umfassten Pigmente. Vorzugsweise umfasst die Paste wenigstens 20 Gew.-% Pigment.

Mit anderen Worten ist der Pigmentgehalt der Paste und in entsprechender Weise auch in der wenigstens einen Beschichtung, welche mittels der Paste nach Ausführungsformen erhalten werden kann, deutlich verschieden von dem der bekannten Pasten. Die andere Zusammensetzung von Paste und entsprechend der wenigstens einen Beschichtung führt in entsprechender Weise auch zu einem anderen Aufbau der Beschichtung. Daher ist es vorliegend nach Ausführungsformen auch möglich, dass die Glasscheibe nach Ausführungsformen auch nur eine einzige Beschichtung aufweist, die wenigstens eine Beschichtung also die einzige Beschichtung ist.

Gemäß einer Ausführungsform umfasst die Paste zwischen wenigstens8 Gew.-% und höchstens 20 Gew.-% Bindemittel, bezogen auf das Gesamtgewicht der Paste. Vorzugsweise ist die Paste so zusammengesetzt, dass dabei zwischen 8 Gew.-% bis 20 Gew.-% des $SiO_2$-Gehalts der Paste, bezogen auf das Gesamtgewicht der Paste aus einem siliziumorganischen Precursor resultieren.

Auf diese Weise kann eine ausreichende Haftfestigkeit der mittels der Paste hergestellten wenigstens einen Beschichtung und der Glasscheibe sichergestellt werden. Auch kann auf diese Weise eine ausreichende Kratzfestigkeit erzielt werden. Trotz diesem im Vergleich zu bekannten Pasten bzw. aus solchen bekannten Pasten resultierenden Beschichtungen recht hohen Bindemittelgehalts wird die Festigkeit der Glasscheibe nach Ausführungsformen dabei nicht unterhalb eines kritischen Wertes herabgesetzt. Dies liegt daran, dass der besonders stark vernetzende Bestandteil, nämlich das polymerartig vernetzte $SiO_2$-Gerüst, das aus der Silizium-organischen Vorläuferphase resultiert, mit Nanopartikeln kombiniert wird. Damit können besonders hohe Festigkeiten der resultierenden beschichteten Glasscheibe nach Ausführungsformen der Offenbarung erzielt werden.

Gemäß einer Ausführungsform umfasst die Paste wenigstens 10 Gew.-% und höchstens 40 Gew.-% Zusatzstoff, vorzugsweise einen Füllstoff, bezogen auf das Gesamtgewicht der Paste und bezogen auf die Summe der von der Paste umfassten Zusatzstoffe, vorzugsweise Füllstoffe.

Der Gehalt der Paste an Zusatzstoffen, speziell Füllstoffen, ist also vergleichsweise hoch, sowohl in der Paste als auch bezogen auf die Gesamtmenge der von der Paste - und in entsprechender Weise von der wenigstens einen Beschichtung - umfassten Pigmente. Nach einer Ausführungsform ist wenigstens ein Füllstoff als Schmierstoff ausgebildet, insbesondere als Graphit, und das Verhältnis von Pigment zu Schmierstoff beträgt mehr als 20:1, vorzugsweise mehr als 30:1 und insbesondere vorzugsweise meiner als 40:1 beträgt, Gesamtgewicht der Summe der von der wenigstens einen Beschichtung umfassten Pigmente und der Summe der als Schmierstoff ausgebildeten Füllstoffe, jeweils bezogen auf den Gewichtsanteil der jeweiligen Bestandteile. Das Verhältnis von der Summe der von der Paste umfassten Pigmente zu der Summe der von der Paste umfassten als Schmierstoffe ausgebildeten Füllstoffe entspricht dabei nach dieser Ausführungsform dem, welches sich auch in der wenigstens einen Beschichtung nach einer Ausführungsform einstellt.

Gemäß einer nochmals weitere Ausführungsform umfasst die Paste bis zu 50 Gew.-% eines Lösungsmittels, vorzugsweise eines hochsiedenden Lösungsmittels mit einem Siedepunkt von wenigstens 150°C und vorzugsweise höchstens 330°C. Insbesondere kann das Lösungsmittel Diethylenglycolmonoethylether sein oder diesen umfassen. Eine solche Ausgestaltung ist besonders günstig für Druckfarben, da auf diese Weise eine gut beispielsweise mittels Siebdruck verdruckbare Paste entsteht, bei der es zu keinem Eintrocknen der Paste auf dem Sieb kommt.

Gemäß einer nochmals weiteren Ausführungsform umfasst die Paste Cellulose, beispielsweise Ethylcellulose, vorzugsweise in einem Gehalt zwischen 0,1 Gew.-% und 1 Gew.-%, bezogen auf das Gesamtgewicht der Paste. Die Cellulose kann beispielsweise in einem hochsiedenden Lösungsmittel gelöst sein, beispielsweise Diethylenglycolmonoethylether.

Eine solche Ausgestaltung einer Paste ist in den zitierten Schriften des Standes der Technik nicht genannt. Bislang war man nämlich davon ausgegangen, dass eine Cellulose, welche beispielsweise vorteilhaft zur Einstellung einer Viskosität der Paste, die besonders vorteilhaft für Siebdruck ist, nicht gut in Sol-Gel-basierten Pasten verwendet werden kann. Dies liegt daran, dass üblicherweise halborganische $SiO_2$-Verbindungen zumeist sauer ankondensiert werden. Zwar kann ein pH-Wert in der Paste nicht bestimmt werden, da die Paste viele organische Lösungsmittel umfasst und das Konzept eines pH-Wertes für solche Lösungen nicht anwendbar ist. Jedoch hatte sich in bekannten Pasten des Standes der Technik gezeigt, dass Cellulose sich zersetzte und auf diese Weise nur Pasten mit wenigen Tagen Topfzeit erhalten werden konnten. Überraschenderweise hat sich aber gezeigt, dass in den vorliegenden Pasten nach der Offenbarung Cellulose verwendet werden kann. Woran dies liegt, ist den Erfindern nicht vollkommen ersichtlich. Möglicherweise beruht dies auf der Lösung der Cellulose in einem geeigneten Lösungsmittel, nämlich einem Ether, wie beispielsweise Diethylenglycolmonoethylether, und dem insgesamt den relativ geringen Gewichtsanteil der Cellulose von höchstens 1 Gew.-%.

Die Verwendung von Cellulose kann dabei vorteilhaft sein, weil auf diese Weise die Viskositätsparameter der Paste eingestellt werden können und gegenüber den Viskositätsparametern von Pasten ohne Cellulose ein besseres Druckbild aufweisen. Vereinfacht gesprochen, weisen Cellulose-haltige Pasten ein eher "honigartiges" Viskositätsverhalten auf, wohingegen ausschließlich mittels Kieselsäuren viskos eingestellte Pasten eine sehr starke Thixotropie aufweisen, was beispielsweise in einem Siebdruckverfahren zu einem ungünstigen, zu stark "pixelartigen", nicht verlaufenden Druckbild führen kann. Dem kann durch Reduktion der Kieselsäure in der Paste begegnet werden, was dann allerdings zu einer insgesamt zu niedrigen Viskosität und dem "Tropfen" der Farbe durch das Sieb führen kann. Die genannten Nachteile können aber auf überraschend einfache Weise gemindert werden durch den Zusatz von Cellulose in den vorgenannten Grenzen.

Die vorliegende Offenbarung betrifft auch einen Verbund. Der Verbund umfasst eine Glasscheibe nach Ausführungsformen sowie eine weitere Glasscheibe, wobei vorzugsweise die wenigstens eine Beschichtung zwischen den beiden Glasscheiben des Verbundes angeordnet ist. Insbesondere kann zwischen den beiden Glasscheiben des Verbundes noch in üblicher Weise eine polymerische Lage angeordnet sein, insbesondere in Form einer Folie, um so ein Verbundglas zu bilden, welches beispielsweise als Windschutzscheibe oder sonstige Fahrzeugverglasung verwendet werden kann.

Beispiele

Die Erfindung wird im Folgenden anhand von Beispielen weiter erläutert. In der folgenden Tabelle sind die Zusammensetzungen von Pasten nach Ausführungsformen der Offenbarung zusammengestellt, mit denen Beschichtungen nach Ausführungsformen und entsprechend Glasscheiben nach Ausführungsformen erhalten werden können.

In der folgenden Tabelle 1 ist eine beispielhafte Zusammensetzung eines $SiO_2$-basierten Sols als Bestandteil des Bindemittels der Paste und - in entsprechender Weise - der Beschichtung nach Ausführungsformen zusammengestellt. Es handelt sich hierbei, wie aus den Angaben in Tabelle 1 ersichtlich ist, um denjenigen Teil des Bindemittels der Paste, welcher eine halborganische Silizium-Verbindung umfasst bzw. aus einer solchen durch Hydrolyse und Kondensation gebildet wird.

*Tabelle 1*

| Einwaage [g] | Stoffbezeichnung | Menge | Einheit | molare Masse | |
|---|---|---|---|---|---|
| 104,16 | TEOS Tetraethoxysilan | 0,5 | mol | 208,32 | g/mol |
| 178,3 | MTEOS Methyltriethoxysilan | 1 | mol | 178,3 | g/mol |
| 1,78 | p-TSH para-Toluolsulfonsäure | 0,01 | mol | 190,22 | g/mol |
| 9,011 | $H_2O$ Wasser | 0,5 | mol | 18,022 | g/mol |

Wie sich aus der nachfolgenden Tabelle 2 ergibt, können dem Bindemittel, also der "halborganischen Si-Verbindung" bzw. korrekter dem aus dieser hergestellten Bindemittel, wie beispielhaft vorstehend beschrieben, dann neben diesem aus Hydrolyse und Kondensation erhaltenen Bestandteil aus wenigstens einer halborganischen Silizium-organischen Vorläuferphase weitere Bestandteile zugegeben werden. Das so insgesamt erhaltene Bindemittel wird im Rahmen der vorliegenden Offenbarung als Sol-Gel-Bindemittel verstanden. Zusammen mit weiteren Komponenten, wie Pigmenten und/oder Füllstoffen, wird dann die Paste erhalten, wobei beispielhafte Zusammensetzungen in der nachfolgenden Tabelle ausgeführt sind.

*Tabelle 2*

| Paste Nr. | 1 | 2 | 3 | 4 | 5 | 6 | 7 |
|---|---|---|---|---|---|---|---|
| Komponente | [g] | [g] | [g] | [g] | [g] | [g] | [g] |
| Silikonbindemittel | | | | 6,00 | | | |
| Halborganische Si-Verbindung | 15,00 | 15,00 | 15,00 | 15,00 | 15,00 | 15,00 | 15,00 |
| Nanopartikeldispersion (37%) in Diethylenglycolmonoethylether | 60,00 | 60,00 | 60,00 | 60,00 | 60,00 | 60,00 | 60,00 |
| Diethylenglykolmonoethylether (DEGMEE) | 9,73 | 9,73 | | | | | |
| Schwarzpigment (Cr-Cu-Spinell) | 3,00 | 0,00 | 3,00 | 3,00 | 10,00 | 3,00 | 3,00 |
| Weißpigment (Rutil) | 0,00 | 2,92 | 0,00 | 0,00 | 0,00 | 0,00 | 0,00 |
| Effektpigment | 22,00 | 22,00 | 22,00 | 22,00 | 15,00 | 10,00 | 10,00 |
| Graphit | 0,68 | 0,68 | 0,68 | 0,68 | 0,68 | 0,68 | 0,68 |
| Ruß (Flammruß Lampenschwarz) | | | | | | 14,00 | |
| Ruß (Typ Printex 95) | | | | | | | 14,00 |
| Kieselsäure | 2,25 | 2,25 | 2,25 | 2,25 | 2,25 | 2,25 | 2,25 |
| Cellulose in DEGMEE | | | 10,00 | 10,00 | 10,00 | 10,00 | 10,00 |
| Entschäumer | 0,20 | 0,20 | 0,20 | 0,20 | 0,20 | 0,20 | 0,20 |

Bei der Nanopartikeldispersion handelt es sich um eine Dispersion von Nanopartikeln, worunter hier $SiO_2$-Partikel verstanden werden, welche eine mittlere Korngröße, bezogen auf den Äquivalenzdurchmesser in Bezug auf das Volumen, von weniger als 1 $\mu$m aufweisen, in Diethylenglykolmonoethylether, wobei der Anteil der Nanopartikel in der Dispersion hier 37 Gew.-%, bezogen auf das Gewicht der Dispersion, beträgt. Selbstverständlich ist es auch möglich, Nanopartikel in anderer Form zuzugeben, beispielsweise in Form eines wässrigen Sols, wie dies beispielsweise unter dem Handelsnamen "Levasil" erhältlich ist. Ein solches Sol hätte jedoch den Nachteil eines gewissen Gehalts an Alkalioxid, insbesondere $Na_2O$, und eine solche Ausgestaltung ist daher nicht bevorzugt. Vorzugsweise ist die Paste daher so ausgestaltet, dass sie eine Dispersion von $SiO_2$-Nanopartikeln in einem organischen Lösungsmittel, vorzugsweise einem hochsiedenden Lösungsmittel, vorzugsweise mit einem Siedepunkt von wenigstens 130°C und bevorzugt höchstens 330°C, umfasst.

Ruße können der Paste gleichfalls zugesetzt werden und wirken dabei als Pigment. Vorzugsweise können nach einer Ausführungsform Flammruße verwendet werden, beispielsweise mit der CAS-Nr. 1333-86-4. Trotz ihrer nominell chemisch gleichen Zusammensetzung zu Graphit, nämlich aus Kohlenstoff, sind sie aufgrund ihrer genauen Herstellung und der daraus resultierenden anderen Partikelform und der im Vergleich zu Graphit geringeren, wenn überhaupt vorhandenen, Kristallinität und der damit einhergehenden anderen Partikelform als Pigment zu betrachten und wirken nicht als Schmierstoff im Sinne der vorliegenden Offenbarung. Die Zugabe von Ruß kann vorteilhaft sein, weil auf diese Weise eine besonders dichte Schicht mit einem besonders schwarzen Farbeindruck erhalten werden kann. Je nach genauer Art Ruß können die Eigenschaften der Paste und auch der resultierenden Beschichtung stark unterschiedlich sein; beispielsweise hat sich gezeigt, dass die oben beschriebene Paste 7, umfassend ein Ruß vom Typ "Printex 95" nur schwer aus dem Sieb geht, also nicht gut verdruckbar ist.

Mit den Pasten nach Ausführungsformen, welche in der vorstehenden Tabelle als Nummer 1 bis 5 aufgeführt sind, wurden Beschichtungen jeweils mittels eines feinen Siebes (140er Gewebe) und mittels eines gröberen Siebes (77er Gewebe) mit Siebdruck auf eine Glasscheibe aufgebracht. Die Ruß umfassenden Pasten wurden mittels eines Siebes mit einem 77er Gewebes aufgedruckt.

Diese werden bei 380°C für eine Stunde thermisch behandelt, d.h. getrocknet bzw. eingebrannt.

Beschreibung der Zeichnungen

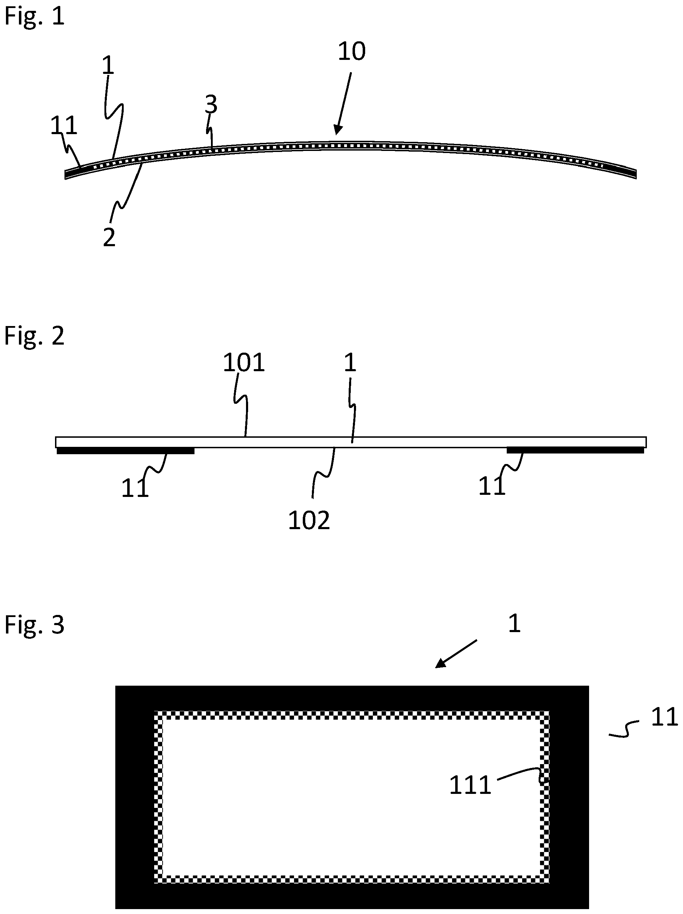

Fig. 1 ist eine schematische und nicht maßstabsgetreue Darstellung eines Verbunds bzw. einer Verbundglasscheibe 10 nach einer Ausführungsform der vorliegenden Offenbarung. Der Verbund 10 umfasst zwei Scheiben 1, 2, wobei es sich bei der Scheibe 1 um eine Glasscheibe für ein Fahrzeug nach einer Ausführungsform der vorliegenden Offenbarung handelt. Scheibe 2 ist eine weitere Glasscheibe und kann beispielsweise aus einem Kalknatronglas oder auch aus dem vorliegend offenbarten Glas der Scheibe 1 bestehen. Zwischen den beiden Glasscheiben 1, 2 ist eine polymerische Lage 3 angeordnet sowie, hier im Randbereich des Verbunds 10, die Beschichtung 11. Diese ist auf einer Seite (nicht bezeichnet) der Glasscheibe 1 angeordnet und kann jeweils im Rahmen der nachfolgenden Beschreibung die wenigstens eine Beschichtung alleine oder zusammen mit der weiteren Beschichtung als Zwischenschicht umfassen.

Aus Gründen der besseren Darstellung wurde hier die Beschichtung 11 als dick, in der Dicke also vergleichbar mit derjenigen der beiden Scheiben 1, 2 dargestellt; dies ist aber, wie ausgeführt, lediglich der besseren Darstellung geschuldet. Die Beschichtung 11 ist in der Regel deutlich dünner als jede der beiden Scheiben 1, 2 und in der Regel auch dünner als die polymerische Lage 3. Bei der polymerischen Lage 3 kann es sich auch um eine Folie handeln.

Der Verbund 10 ist hier, wie sichtbar, als gebogene Verbundglasscheibe ausgebildet, wie sie beispielsweise auch als Windschutzscheibe verwendet werden kann. Allgemein, ohne Beschränkung auf das in Fig. 1 dargestellte Beispiel, ist es jedoch auch möglich, dass der Verbund 10 keine gebogenen Scheiben 1, 2 umfasst, sondern eben ausgebildet ist. Auch ist es möglich, dass die Krümmung des Verbunds 10 gerade umgekehrt ausgebildet ist zu der in Fig. 1 dargestellten Abbildung. Im Beispiel der Fig. 1 wäre die Glasscheibe 1 die Außenseite einer Windschutzscheibe, es ist jedoch allgemein auch möglich, dass die Glasscheibe 1 an der Innenseite einer Windschutzscheibe angeordnet ist. In jedem Fall ist allerdings die Beschichtung 3 zwischen den beiden Glasscheiben 1, 2 angeordnet.

Eine Anordnung wie in Fig. 1 kann aber vorteilhaft sein, da die Glasscheibe 1 als Komponenten des glasigen Materials $SiO_2$ und $B_2O_3$ umfasst. Ein solches Borosilikatglas ist kratzbeständiger als beispielsweise ein Kalk-Natron-Glas, sodass es vorteilhaft sein kann, wenn die Glasscheibe 1 wie in Fig. 1 dargestellt im Verbund 10 so ausgebildet ist, dass sie nach "außen" weist, also im Falle einer Verwendung als Windschutzscheibe nach außen weisen würde. Denn auf diese Weise wäre ein besserer Schutz vor Steinschlag und ähnlichen mechanischen Belastungen gegeben.

Zur Verdeutlichung des Aufbaus der Glasscheibe 1 nach Ausführungsformen ist diese in den Fig. 2 und 3 jeweils in Form einer schematischen und maßstabsgetreuen Abbildung dargestellt. Fig. 2 zeigt dabei eine Seitenansicht. Hier ist die Glasscheibe 1 allerdings noch nicht gebogen ausgebildet. Allgemein, ohne Beschränkung auf das in Fig. 1 gezeigte Beispiel einer Glasscheibe 1, ist es auch möglich, dass die Glasscheibe gebogen vorliegt. Vorteilhaft kann es aber sein, wenn zunächst eine flache, nicht gebogene Scheibe 1 verwendet wird, welche dann später gebogen wird, und zwar beispielsweise in einem thermischen Verfahren. Auch hier ist aus Gründen der besseren Darstellung die Dicke der Beschichtung 11 deutlich größer dargestellt als in der Realität.

Die Anordnung der Scheibe 1 entspricht derjenigen in Fig. 1, wie ausgeführt mit der Ausnahme, dass die Scheibe in Fig. 2 nicht gebogen ausgeführt ist. Wie man erkennen kann, ist die Beschichtung 11 hier auf der Seite 102 ausgebildet, welche im Verbund 10 der zweite Scheibe 2 zugewandt ist. Nicht abgebildet ist hier die polymerische Lage 3, welche im Verbund zwischen der Scheibe 1 und der Scheibe 2 angeordnet ist. Es wird hier ausdrücklich darauf hingewiesen, dass die polymerische Lage 3 sowohl direkt die Seite 102 der Scheibe kontaktiert als auch auf der in dem Bereich (oder den Bereichen) der Scheibe 1 (bzw. der Seite 102 der Scheibe 1) angeordneten Beschichtung 11 angeordnet ist.

Die Beschichtung 11 ist hier im Randbereich der Scheibe 1 angeordnet, in der Darstellung der Fig. 2 jeweils links und rechts. Hier kann es beispielsweise sein, dass die Beschichtung insgesamt in Form eines "Rahmens" aufgebracht ist.

Hierzu wird auf die Fig. 3 verwiesen, welche in ebenfalls schematischer und nicht maßstabsgetreuer Abbildung eine Aufsicht auf eine Scheibe 1 nach einer Ausführungsform zeigt. Die Beschichtung 11 ist hier als um den Rand der Scheibe 1 umlaufender Rahmen ausgebildet, wobei die Beschichtung zunächst deckend, also als Schicht ohne Unterbrechungen, ausgebildet ist, und zur Mitte der Scheibe 1 hin über ein Raster- oder Punktmuster 111 in den unbeschichteten Bereich übergeht. Dieser unbeschichtete Bereich ist für den Fall einer Verwendung der Scheibe 1 in einem Verbund 10 der Sichtbereich beispielsweise einer Windschutzscheibe. Selbstverständlich ist es allgemein möglich, dass der Rahmen nicht so gleichmäßig ausgebildet ist wie schematisch in Fig. 3 dargestellt, sondern beispielsweise Ausbuchtungen aufweist, wie dies beispielsweise bei den Windschutzscheiben im Bereich der Rückspiegel häufig der Fall ist.

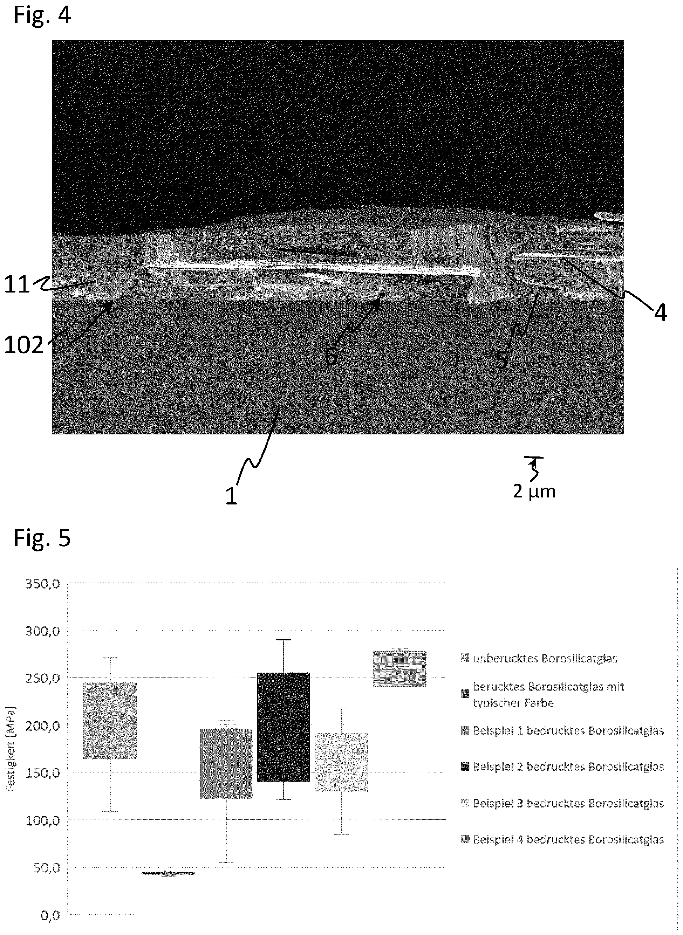

Fig. 4 ist eine rasterelektronenmikroskopische Aufnahme einer Scheibe 1 nach einer Ausführungsform der Offenbarung, versehen mit einer Beschichtung 11, angeordnet auf der Seite 102 der Scheibe 1. Die Beschichtung umfasst Pigmente, wobei vorliegend nur ein beispielhaftes Pigment 4 bezeichnet ist, bei welchem es sich um ein plättchenförmiges Pigment handelt, also um ein sogenanntes Effektpigment. Wie man der Darstellung in Fig. 4 entnehmen kann, ist die Beschichtungmatrix 5, welche auch als Bindemittel 5 bezeichnet werden kann, recht feinkörnig ausgebildet. Es umfasst $SiO_2$ bzw. ist aus $SiO_2$ ausgebildet, und die Beschichtung umfasst weniger als 500 ppm $Bi_2O_3$ und/oder weniger als 500 ppm ZnO und/oder weniger als 500 ppm $B_2O_3$ und/oder weniger als 500 ppm eines Alkalioxides, jeweils bezogen auf das Gewicht. Insbesondere umfasst auch das Bindemittel 5 $SiO_2$ und weniger als 500 ppm $Bi_2O_3$ und/oder weniger als 500 ppm ZnO und/oder weniger als 500 ppm $B_2O_3$ und/oder weniger als 500 ppm eines Alkalioxides, jeweils bezogen auf das Gewicht. Das Bindemittel ist hier als Sol-Gel-Bindemittel ausgebildet.

Die Beschichtung 11 und/oder das Bindemittel 5 können auch Poren 6 umfassen. Diese sind aber relativ klein ausgebildet, sodass die Beschichtung 11 insbesondere mikroporös ausgebildet ist oder sein kann und/oder höchstens Poren mit einer maximalen lateralen Abmessung, beispielsweise einem Durchmesser, von 1 $\mu$m aufweist. Diese sind,

wie auch Fig. 4 zu entnehmen, vorzugsweise an der Grenzfläche zwischen der Scheibe 1 und der Beschichtung 11, also auf oder nahe bei der Seite 102 der Scheibe 1, angeordnet. Der Maßstab der Darstellung ist unterhalb der rasterelektronenmikroskopischen Darstellung in rechten unteren Bereich von Fig. 4 angeordnet und zeigt die Länge von 2 $\mu$m an.

Die Beschichtung 11 umfasst hier auch wenigstens einen Zusatzstoff, welcher bevorzugt als Füllstoff ausgebildet ist. Allerdings ist dieser Zusatzstoff in der rasterelektronenmikroskopischen Darstellung nicht sichtbar. Vorzugsweise weist die Glasscheibe 1 in dem wenigstens einen Bereich, welcher hier auf der Seite 102 der Glasscheibe 1 angeordnet ist und in welchem die Beschichtung 11 aufgetragen ist, eine Biegefestigkeit zwischen wenigstens 80 und höchstens 300 MPa, bevorzugt wenigstens 100 und höchstens 210 MPa, besonders bevorzugt wenigstens 140 MPa, auf.

In Fig. 5 ist die Biegefestigkeit unterschiedlicher Glasscheiben aus Borosilikatglas dargestellt, welche unterschiedliche Beschichtungen aufweisen bzw. - als Referenz - unbedruckt vorliegen. Das unbedruckte Borosilikatglas ist hinsichtlich der Ergebnisse der Festigkeit in Fig. 5 ganz links dargestellt und zeigt in diesem sogenannten "Box Plot" die Festigkeit, die für solche unbedruckte Glasscheiben erhalten werden. Festigkeiten liegen hier im Mittel bei etwas über 200 MPa. Demgegenüber sinkt die Festigkeit für Glasscheiben, die mit herkömmlichen, glasflussbasierten Beschichtungen versehen sind, wie anhand der Werte für die Proben, die in Fig. 5 als zweites von links aufgetragen sind. Hier werden Festigkeitswerte von unter 50 MPa erhalten. Die Festigkeit sinkt durch solche herkömmlichen Beschichtungen also beträchtlich.

Dies ist anders für Beschichtungen 11 nach Ausführungsformen, welche als "Beispiele 1 bis 4" in Fig. 5 dargestellt sind. Zwar kann auch hier eine Absenkung der Festigkeit gegenüber der unbedruckten Glasscheibe auftreten (Beispiele 1 und 3), dennoch werden auch in diesem Fall noch immer Werte von mehr als 140 MPa erhalten, hier sogar über 150 MPa (im Mittelwert). Beispiel 2 weist Festigkeitswerte auf, welche vergleichbar sind mit denen der unbedruckten Scheiben, jedoch eine etwas höhere Schwankung aufweisen als diese. Schließlich sind sogar Beschichtungen nach Ausführungsformen möglich, wie in Beispiel 4, bei welchen die Festigkeit gegenüber unbedruckten Glasscheiben durch die Beschichtung verbessert ist, siehe Beispiel 4.

Bezugszeichenliste

| 1,2 | Glasscheibe |
|---|---|
| 3 | Polymerische Lage |
| 10 | Verbund, Verbundglasscheibe |
| 11 | Beschichtung |
| 102 | Seite der Scheibe 1 |
| 111 | Raster- oder Punktmuster |
| 4 | Pigment |
| 5 | Bindemittel |
| 6 | Poren |

**Patentansprüche**

1. Glasscheibe, insbesondere bereichsweise beschichtete Glasscheibe für ein Fahrzeug, umfassend ein Glas umfassend $SiO_2$ und $B_2O_3$, umfassend

wenigstens eine in wenigstens einem Bereich wenigstens einer Seite der Glasscheibe aufgetragene Beschichtung,
wobei die wenigstens eine Beschichtung

wenigstens ein Bindemittel umfassend $SiO_2$,
wenigstens ein Pigment und
vorzugsweise wenigstens einen als Füllstoff ausgebildeten Zusatzstoff umfasst, und

wobei vorzugsweise die Glasscheibe in dem wenigstens einen Bereich, welcher auf der wenigstens einen Seite der Glasscheibe die aufgetragene wenigstens eine Beschichtung aufweist, eine Biegefestigkeit zwischen wenigstens 80 und höchstens 300 MPa, bevorzugt wenigstens 100 und höchstens 210 MPa, besonders bevorzugt wenigstens 140 MPa, aufweist,

**dadurch gekennzeichnet, dass** die wenigstens eine Beschichtung weniger als 500 ppm $Bi_2O_3$ und/oder weniger als 500 ppm ZnO und/oder weniger als 500 ppm $B_2O_3$ und/oder weniger als 500 ppm eines Alkalioxides, jeweils bezogen auf das Gewicht, umfasst.

2. Glasscheibe nach Anspruch 1, wobei die wenigstens eine Beschichtung nur ein Bindemittel umfasst.

3. Glasscheibe nach einem der Ansprüche 1 bis 2, wobei das Bindemittel als Sol-Gel-Bindemittel ausgebildet ist.

4. Glasscheibe nach einem der Ansprüche 1 bis 3, aufweisend wenigstens eines der folgenden Merkmale:

- in wenigstens einem Teilbereich oder innerhalb des gesamten wenigstens einen Bereichs der wenigstens einen Seite der Glasscheibe ist eine weitere Beschichtung auf der Glasscheibe angeordnet, bevorzugt eine glasbasierte Beschichtung, insbesondere eine Emaille-Beschichtung,
- die wenigstens eine Beschichtung umfasst zwischen wenigstens 15 Gew.-% und höchstens 55 Gew.-% Bindemittel, vorzugsweise wenigstens 20 Gew.-%, besonders bevorzugt wenigstens 25 Gew.-%,
- die wenigstens eine Beschichtung umfasst zwischen wenigstens 20 Gew.-% und höchstens 30 Gew.-% Pigment, bezogen auf die Summe aller von der wenigstens einen Beschichtung umfassten Pigmente,
- das Glas der Glasscheibe weist einen linearen thermischen Ausdehnungskoeffizienten zwischen $2 * 10^{-6}$/K und $6 * 10^{-6}$/K auf,
- das Glas der Glasscheibe umfasst wenigstens 60 Gew.-% $SiO_2$ bis höchstens 85 Gew.-% $SiO_2$ und/oder wenigstens 7 Gew.-% $B_2O_3$ bis höchstens 26 Gew.-% $B_2O_3$,
- die wenigstens eine Beschichtung weist einen linearen thermischen Ausdehnungskoeffizienten zwischen mindestens $3 * 10^{-6}$/K und höchstens $10 * 10^{-6}$/K auf, bevorzugt von weniger als $9 * 10^{-6}$/K,
- die Glasscheibe weist eine Dicke zwischen mindestens 1 mm und höchstens 12 mm auf.

5. Glasscheibe nach einem der Ansprüche 1 bis 4, wobei die wenigstens eine Beschichtung mikroporös ausgebildet ist und/oder höchstens Poren mit einer maximalen lateralen Abmessung, beispielsweise einem Durchmesser, von 1 $\mu$m aufweist.

6. Paste zur Herstellung einer Beschichtung auf einer Glasscheibe, vorzugsweise einer Glasscheibe nach einem der Ansprüche 1 bis 5, wobei die Paste umfasst

- wenigstens ein Bindemittel umfassend $SiO_2$
- wenigstens ein Pigment,
- wenigstens ein Medium und
- vorzugsweise wenigstens einen als Füllstoff ausgebildeten Zusatzstoff,

**dadurch gekennzeichnet, dass** das Bindemittel weniger als 500 ppm $Bi_2O_3$ und/oder weniger als 500 ppm ZnO und/oder weniger als 500 ppm $B_2O_3$ und/oder weniger als 500 ppm eines Alkalioxides, jeweils bezogen auf das Gewicht, umfasst.

7. Paste nach Anspruch 6, wobei das Bindemittel umfassend $SiO_2$ als Sol-Gel-Bindemittel ausgebildet ist, umfassend wenigstens eine durch Hydrolyse und Kondensation wenigstens einer halborganischen Siliziumoxid-Vorläuferphase vernetzte $SiO_2$-Phase, wobei unter einer halborganischen Siliziumoxid-Vorläuferphase eine Silizium-Verbindung verstanden wird, bei welcher an das Silizium-Atom direkt oder über ein Sauerstoff-Brückenatom ein organischer Rest gebunden ist, insbesondere ein Alkyl-Rest.

8. Paste nach einem der Ansprüche 6 oder 7, umfassend wenigstens einen Füllstoff, wobei ein Füllstoff eine Kieselsäure, vorzugsweise eine pyrogene Kieselsäure, oder ein Schmierstoff, insbesondere Graphit, ist oder umfasst, und wobei im Falle des Vorliegens des Füllstoffs als Schmierstoff das Verhältnis von Pigment zu Schmierstoff mehr als 20:1, vorzugsweise mehr als 30:1 und insbesondere vorzugsweise meiner als 40:1 beträgt, bezogen auf das Gesamtgewicht der Summe der von der Paste umfassten Pigmente und der Summe der als Schmierstoff ausgebildeten Füllstoffe, jeweils bezogen auf den Gewichtsanteil der jeweiligen Bestandteile.

9. Paste nach einem der Ansprüche 6 bis 8, aufweisend wenigstens eines der folgenden Merkmale:

- Die Paste umfasst zwischen wenigstens 15 Gew.-% und höchstens 30 Gew.-% Pigment, vorzugsweise wenigstens 20 Gew.-% Pigment, bezogen auf das Gesamtgewicht der Paste und bezogen auf die Summe der von der Paste umfassten Pigmente,
- Die Paste umfasst zwischen wenigstens 8 Gew.-% und höchstens 20 Gew.-% Bindemittel, bezogen auf das Gesamtgewicht der Paste,
- Die Paste umfasst zwischen wenigstens 10 Gew.-% und höchstens 40 Gew.-% Zusatzstoff, vorzugsweise einen Füllstoff, bezogen auf das Gesamtgewicht der Paste und bezogen auf die Summe der von der Paste umfassten Zusatzstoffe, vorzugsweise Füllstoffe,
- Die Paste umfasst einen Füllstoff mit einem linearen thermischen Ausdehnungskoeffizienten zwischen $-10 * 10^{-6}$/K und $+10 * 10^{-6}$/K ist, insbesondere vorzugsweise eine bevorzugt pyrogene Kieselsäure und/oder Graphit,
- Die Paste umfasst bis zu 50 Gew.-% eines Lösungsmittels, vorzugsweise eines hochsiedenden Lösungsmittels mit einem Siedepunkt von wenigstens 130°C und bevorzugt höchstens 330°C.

10. Paste nach einem der Ansprüche 6 bis 9, umfassend Cellulose, vorzugsweise einer Ethylcellulose, vorzugsweise in einem Gehalt zwischen 0,1 Gew.-% und 1 Gew.-%, bezogen auf das Gesamtgewicht der Paste.

11. Verbund umfassend eine Glasscheibe nach einen der Ansprüche 1 bis 5 sowie eine weitere Glasscheibe, wobei vorzugsweise die wenigstens eine Beschichtung zwischen den Glasscheiben angeordnet ist.

12. Verfahren zur Herstellung einer Glasscheibe, vorzugsweise einer Glasscheibe nach einem der Ansprüche 1 bis 5, wobei auf wenigstens eine Seite der Glasscheibe wenigstens in einem Bereich eine Paste, vorzugsweise eine Paste nach einem der Ansprüche 6 bis 10, aufgetragen und eingebrannt wird, sodass in dem wenigstens einen Bereich wenigstens eine Beschichtung vorliegt.

13. Glasscheibe, vorzugsweise Glasscheibe nach einem der Ansprüche 1 bis 5, hergestellt oder herstellbar in einem Verfahren nach Anspruch 12 und/oder unter Verwendung einer Paste nach einem der Ansprüche 6 bis 10.

Fig. 1

10

1

3

11

2

Fig. 2

101

1

11

102

11

Fig. 3

1

11

111

## Fig. 4

## Fig. 5

Europäisches
Patentamt
European
Patent Office
Office européen
des brevets

**EUROPÄISCHER RECHERCHENBERICHT**

Nummer der Anmeldung

EP 24 16 5030

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,P | EP 4 166 519 A1 (SCHOTT AG [DE]; SCHOTT TECHNICAL GLASS SOLUTIONS GMBH [DE]) 19. April 2023 (2023-04-19) * Absatz [0138]; Ansprüche 1,2,11 * ----- | 1-13 | INV. C03C8/16 C03C14/00 C03C17/04 C03C27/10 C03C3/089 |
| X | EP 3 169 735 B1 (SCHOTT AG [DE]) 23. Mai 2018 (2018-05-23) * Beispiele 3-5; Tabellen 3-5 * ----- | 1-4,6,7, 9,11 | |
| A | US 2010/047556 A1 (BOCKMEYER MATTHIAS [DE] ET AL) 25. Februar 2010 (2010-02-25) * Ansprüche 1,9 * ----- | 1-13 | |

**RECHERCHIERTE SACHGEBIETE (IPC)**

C03C

Der vorliegende Recherchenbericht wurde für alle Patentansprüche erstellt

| Recherchenort | Abschlußdatum der Recherche | Prüfer |
|---|---|---|
| München | 18. September 2024 | Saldamli, Saltuk |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

 
& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 16 5030

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-09-2024

| Im Recherchenbericht angeführtes Patentdokument | Datum der Veröffentlichung | Mitglied(er) der Patentfamilie | Datum der Veröffentlichung |
|---|---|---|---|
| EP 4166519 A1 | 19-04-2023 | CN 115974420 A | 18-04-2023 |
| | | EP 4166519 A1 | 19-04-2023 |
| | | PE 20230744 A1 | 05-05-2023 |
| | | US 2023123130 A1 | 20-04-2023 |
| EP 3169735 B1 | 23-05-2018 | DE 102014010335 A1 | 14-01-2016 |
| | | DE 202015006002 U1 | 22-09-2015 |
| | | EP 3169735 A1 | 24-05-2017 |
| | | ES 2676757 T3 | 24-07-2018 |
| | | WO 2016008848 A1 | 21-01-2016 |
| US 2010047556 A1 | 25-02-2010 | AT E546415 T1 | 15-03-2012 |
| | | CN 101618949 A | 06-01-2010 |
| | | DE 102008031428 A1 | 07-01-2010 |
| | | EP 2141133 A1 | 06-01-2010 |
| | | ES 2378598 T3 | 16-04-2012 |
| | | JP 5149249 B2 | 20-02-2013 |
| | | JP 2010013348 A | 21-01-2010 |
| | | US 2010047556 A1 | 25-02-2010 |

EPO FORM P0461

Für nähere Einzelheiten zu diesem Anhang : siehe Amtsblatt des Europäischen Patentamts, Nr.12/82

**EP 4 455 102 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015059406 A
- WO 2017157660 A1
- WO 20170005596 A1
- WO 2019130285 A1
- WO 2018122769 A1
- DE 202008003804 U1
- US 20130266781 A1

- US 20090233082 A2
- FR 3084355 A1
- US 20150225285 A2
- US 20100047556 A2
- US 20100028629 A2
- EP 3830046 A1

**In der Beschreibung aufgeführte Nicht-Patentliteratur**

- *CHEMICAL ABSTRACTS,* 1333-86-4